# DEMANDE DE BREVET EUROPEEN

(11) **EP 1 798 840 A1**
(43) Date de publication de la demande: **20.06.2007**
(21) Numéro de dépôt: 05784589.3
(22) Date de dépôt: 22.07.2005
(51) Int. Cl.: H02J 13/00, H04L 12/28

(54) **SYSTEME MODULAIRE DE COMMANDE INTELLIGENTE ET CONNECTE POUR INSTALLATION DOMOTIQUE**

(30) Priorité: 15.09.2004 ES 200402254 P
(71) Demandeur: Sociedad Europea de Redes Virtuales e Ingenieria, 46005 Valencia (ES)
(72) Inventeur: ARNAU VIVES, Antonio, E-46005 Valencia (ES); SOGORB DEVESA, Tomás, E-46005 Valencia (ES); LATORRE MONEDERO, José Antonio, E-46005 Valencia (ES); SOLANO MANTILLA, M nica, E-46005 Valencia (ES); MARTINEZ GÓMEZ, Vicente, E-46005 Valencia (ES)
(86) Numéro de dépôt international: PCT/ES2005/000414
(87) Numéro de publication internationale: WO 2006/040364

(57) **Abrégé**

Le système de l'invention permet la commande électronique des dispositifs électriques de la maison, reliés à l'des forces qui distribue la puissance par des boîtes distribuées dans les séjours de la maison. Le système peut intégrer à l'intérieur des boîtes électriques de commutateur et est constitué par plusieurs modules qui font de l'interface entre un réseau de transmissions et les dispositifs des forces. Le système continue de permettre la commande manuelle de ces dispositifs, même en cas d'échec complet du système de domótico. La prolongation du système n'exige pas la reprogrammation des modules de préexistence l'uns des. Le système de domótico est compatible avec l'Internet de réseau. L'invention a l'utilité dans le secteur du domótica pour la commande des dispositifs électriques de la maison, aussi bien que pour la commande des sondes et la commande des alarmes. alemán un francésalemán un inglésárabe inglés BETAchino (simplificado) inglés BETAcoreano inglés BETAespañol inglésfrancés alemánfrancés inglésinglés alemáninglés un árabe BETAinglés un pantalon en twill (simplificado) BETAinglés un coreano BETAinglés españolinglés francésinglés italianoinglés japonés BETAinglés portuguésinglés un ruso BETAitaliano inglésjaponés inglés BETAportugués un inglésruso inglés BÊTAS

## Description

### OBJECTIF DE L'INVENTION

L'invention suivante renvoie, comme dit précédemment, à un système modulaire de contrôle, dont les caractéristiques de conception et de construction sont spécialement faites pour maîtriser, de manière intelligente, tout type de dispositif électrique comme : des prises, des interrupteurs, des moteurs, des sytèmes de climatisateurs, et tout autre appareil électrique qui puisse se maitriser grace à une source d'alimentation électrique. Ainsi, le système objet de l'invention peut recevoir des informations de tout type de capteur ou de dispositif externe, avec ou sans fil, et agir de manière intelligente, en fonction des informations reçues, par exemple en ce qui concerne les dispositifs électriques ; par exemple, mettre en marche une alarme, fermer des valves électroniques, envoyer des signaux d'alarmes etc.

Le design et la conception de la connection entre le système domotique intelligent et les èlèments de l'installation électrique qui doivent être contrôlés sont aussi l'objet de cette invention.

### CHAMP DE L'INVENTION

Le système de l'invention est particulièrement relié au contrôle intelligent des dispositifs, de la sécurité des alarmes techniques, comme les inondations, les fumées, les gaz, etc., et de la sécurité concernant la présence et la surveillance dans la maison. Il peut également être utilisé dans le secteur industriel et de la construction pour la gestion et le contrôle total des dispositifs et des appareils électriques, la sécurité des alarmes, des techniques et d'intrusion, ainsi que de la surveillance dans les grandes surfaces.

Le système de l'invention est aussi relié au secteur de services de réseau, surtout les services multimédia dans le foyer, puisqu'il est inclus dans la gestion de ceux-ci.

### ANTECEDENTS DE L'INVENTION

Il existe actuellement plusieurs systèmes domotiques pour le contrôle intelligent du foyer, sans qu'il y ait un leader dans ce domaine. Les différents systèmes domotiques utilisent des topologies de connections parmi lesquelles l'on peur citer : bague, bus, étoile, ou bien des combinaisons de celles-ci ; et un contrôle des communications et du système qui peut-être, dans les deux cas, distribué, centralisé ou mixte. Le choix de la topologie de connexion est importante pour réduire les coûts et la complexité du câblage, ainsi que pour augmenter la sécurité face aux erreurs. Une étude des avantages et des inconvénients des diffèrentes topologies et des modes de contrôles apparaissent dans le brevet ES 2133118 dont la titularité est de Fabrica Electrotéctica, S.A. Apparemment la solution du câblage dans le bus, très utilisé par la majorité des systèmes existants, c'est celle qui optimise le mieux le coût du câblage. Cependant, une erreur dans le bus pourrait laisser sans service un nombre indéterminé de dispositifs de contrôle reliés au bus, ce pourquoi la sécurité du système face aux problèmes diminue. La topologie en étoile, augmente la sécurité face aux problèmes puisque seuls les dispositifs reliés aux branches qui ont un problème cessent de fonctionner. Par conséquent, la combinaison entre les deux topologies est le plus juste ; toutefois, dans les systèmes qui existent actuellement, le fait d'utiliser une topologie ou une autre n'évite pas la perte de contrôle des utilisateurs face aux problèmes dans le système domotique.

D'autre part, le contrôle de communication distribué, où chaque partie du système a la capacité de communiquer avec le reste, simplifie le cablage, puisqu'il n'est pas nécessaire de connecter toutes les parties avec un système central qui gère les communications, et facilite l'extension des services qui, souvent, est limitée par le système central. Concernant le contrôle du système, la manière distribuée, où chaque élément du système domotique incorpore une certaine intelligence pour agir de manière autonome, il augmente le coût des noeuds mais il évite en même temps, la nécessité de câbler tous les dispositifs à un noeud qui permet le contrôle centralisé su système ; cela simplifie la conception de ce dernier, augmentant la sécurité face aux problèmes. En effet, dans le cas du contrôle centralisé , le probléme ou la tombée du noeud central rend le système hors de contrôle. Cependant, dans les systémes actuels, l'utilisation d'un système général de contrôle distribué ne garantie pas non plus à l'utilisateur le contrôle conventionel des dispositifs face à une chute du système domotique.

Par ailleurs, il existe des technologies différentes pour établir la communication entre les divers noeuds d'un système domotique et parmi ceux-là le noeud central dans le cas où il existe. Certaines de celles-ci requièrent une structure spécifique pour l'installation de la distribution d'énergie électrique ou celle-ci doit changer, en modifiant la conception d'une installation conventionnel et nécessitant pour ce faire du personnel spècialement préparé pour réaliser de telles tâches. De cette façon, l'économie et la simplicité de ce câblé qui représente le choix d'une topologie déterminée dans l'installation électrique est largement perdue avec le surcoût de la main d'oeuvre spécialisée.

Avec tout ce qui est décrit jusqu' à présent on peut faire apparaître deux des objectifs fondamentaux de l'invention, qui sont : a) que l'utilisateur ne perd jamais le contrôle des dispositifs et des services de la maison même dans le cas d'une tombée du système domotique et b) que le système domotique puisse s'incorporer dans toutes les installations conventionnelles de distribution d'énergie électrique, sans recourir à des modifications différentes de celles qui se réalisent habituellement dans des installations comportant ces caractéristiques. C'est-á-dire, qui n'exige pas une installation électrique sur mesure et qui puisse s'incorporer directement dans toute installation de conception traditionnelle. D'autres caractéristiques et avantages spécifiques de la demande actuelle de brevet se mettront en évidence dans l'étude présente de la technique et dans la description de cette dernière.

Le brevet ES 2121970, dont la titularité est de Schneider electric S.A., présente comme objet d'invention une installation de distribution d'énergie électrique avec une structure de communication domotique. Son avantage est qu'elle optimise l'installation pour l'objet de son invention. Cependant, elle a un inconvénient important qui doit effectuer une installation électrique spécifique dans ce but et par conséquent ne peut pas être incorporé dans des logements dont la structure d'installation électrique est différente. Au contraire l'objet de cette demande n'exige pas une installation électrique prédéfinie ce qui permet son intégration dans une installation électrique conventionnelle. D'autre part, le brevet ES 2121970 le brevet fait mention de la mise en marche manuelle des dispositifs, toutefois n'indique pas le fonctionnement indépendant du système manuel et de ce qui est domotique. A ce sujet il est important de mentionner que le serveur qui utilise pour la distribution de l'énergie aux différentes charges, objet du brevet d'invention français n° 92.03434 présentée le 19 Mars 1992 par le même titulaire, et décrit aussi au schéma 3 du brevet qui s'analyse, ne permet pas de structurer un système d'alimentation de charges échangées, ce pourquoi il n'est pas possible de libérer la mise en marche manuelle de la domotique, de sorte qu' un problème dans le système domotique ne puisse pas utiliser la mise en marche manuelle. Cela constitue un autre avantage important du système objet de la demande actuelle en ce qui concerne le brevet français n° 92.03434 déjà cité. Un autre avantage fondamental de l'objet de l'invention est sa modularité, facilitant les tâches de maintenance et de réparation, ainsi que la connexion de sous-modules intelligents qui peuvent effectuer plusieurs fonctions, comme : sous-modules de mise en marche et de contrôle de charges, sous-modules d'ajustement de puissance électrique (dimmer), sous-modules de téléphonie mobile, sous-modules de capteurs, qui seront décrits de manière détaillée dans la description de l'invention et qui lui donne une universalité. Cette modularité, cependant, n'empêche pas que plusieurs sous-modules puissent s'incorporer ensemble formant un seul module compact dont les spécificités et caractéristiques seraient l'union des spécificités et des caractéristiques des différents sous-modules qui la compose.

Dans le brevet ES 2133118 présenté le 21 Octobre 1997 et dont le demandeur est fábrica Electrotécnica Josa, S.A., l'on présente un système domotique pour le contrôle intelligent du foyer, basé sur une topologie de câblage, en principe de type bus, avec des systèmes de contrôle de communication et de gestion distribuées. Ce système domotique incorpore différents modules parmi lesquels se détachent les modules d'accès et les noeuds de contrôle. Ces deux modules se connectent directement au bus de communication et sont alimentés de façon interne par un courant continu de 24-48 Volts qui parcourt l'installation. Une ligne de puissance extérieure arrive aussi jusqu'aux noeuds qui s'occuppent de distribuer les charges finales. Les noeuds, à leur tour, contrôlent les différents éléments comme les interrupteurs, lumières, valves, etc. les modules d'accès se programment en fonction de l'installation existante et agissent sur les noeuds. Ces modules d'accès servent, à leur tour, pour agir sur le système. Les principales differences sont les suivantes :
- L'alimentation interne des différents dispositifs qui pendent du bus s'opère par une ligne centralisée de courant continu de 24-48 Volts. Par conséquent lorsqu'une problème surgit sur la ligne la totalitè du système ne fonctionne plus.
- Les noeuds contrôlent a leur tour les charges et les interrupteurs de façon à ce que lorsque l'utilisateur agit sur un interrupteur ce qu'il fait en réalité c'est envoyer un ordre au noeud correspondant qui agit en fonction de sa programmation spécifique, en activant, par exemple, une lumière. C'est-à-dire que l'utilisateur n'agit pas directement sur l'allumage de la lumière comme cela serait le cas pour une installation électrique conventionnelle. Cela suppose, entre autres choses, qu'une tombée du noeud impliquerait une perte de contrôle, de la part de l'utilisateur, des dispositifs contrôlès par ce noeud. C'est une des différences fondamentales avec l'objet de la demande actuelle. De plus, cette différence est générale dans l'état actuel de la technique, puisque l'invention rend indépendante le mode de fonctionnement manuel de la domotique, conférant à l'utilisateur le contrôle total sur son logement même dans le cas d'un problème du système domotique, ce qui constitue une sécurité de l'installation domotique ce qui concerne le contrôle de l'utilisateur. Pour cette demande cela constitue un aspect fondamental qui se retrouve dans l'objet de l'invention.
- La topologie de l'installation est, principalement, de type bus alors que la topologie du cablâge de cette demande est de type étoile. Cela augmente la sécurité face aux problèmes du bus ce qui entraînerait le non fonctionnement de tout le système domotique, alors que pour la configuration en mode étoile le non fonctionnement s'appliquerait uniquement aux dispositifs de la branche qui ne fonctionne plus. Même ainsi, il convient de rappeler que même dans ces circonstances, le système objet de cette demande, permet à l'utilsateur de maitriser tous les éléments de façon conventionnelle.
- Une extension du système requiert la reprogrammation des modules d'accès qui, à leur tour, ont une incidence sur le reste des noeuds. Dans le système objet de cette demande, une extension du système ne requiert aucune reprogrammation d'aucun module ou du système central. L'extension des services, dans le système objet de cette demande, est automatique dans le mesure où les modules et les services qui viennent s'ajouter dans le système se révèlent à celui-ci et leur fournit des informations concernant son mode de contrôle. Ainsi, l'extension du système est transparent pour l'utilisateur et ne requiert pas la reprogrammation de ce dernier par des experts. Cette caractéristique facilite énormément l'extension et rend le système plus accessible à l'utilisateur.
- Le système limite l'extension a 16 230 noeuds. Cette limite est dûe au nombre d'adresses disponibles sur le réseau internet, c'est-à-dire qu'il peut supporter un nombre de plusieurs dispositifs à forte magnitude.

Le brevet d'invention ES 2078149 accordée le 30 septembre 1997 à José Luis san Recio, présente un systéme domotique pour le contrôle total du logement au moyen d'un microprocesseur. Bienque la conception de l'objet de ce brevet est différente de celle de cette demande, ils ont en commun le fait qu'il n'est pas nécessaire de modifier l'installation électrique du logement. Cependant, il est nécessaire de placer un module au bout, intercalé entre la ligne électrique et chaque appareil qu'il veut contrôler, ce qui augmente le coût d'une installation domotique complète du logement. L'invention qui est décrite dans cette demande s'intégre dans les noeuds d'une installation électrique, en agissant comme une interface intelligente entre celle-ci et ses éléments et le réseau de communication. Cela permet de contrôler grâce à une seule interface plusieurs éléments de l'installation telles que les lumières, les prises, les valves électroniques et tout autre élément qui s'alimente par courant, quelque soit le type, continu ou alternatif. La conception de la connexion entre cet interface intelligent et les éléments de l'installation électrique donnent l'assurance que les éléments de l'installation électrique peuvent continuer à se contrôler de forme manuelle conventionnelle en cas de chute de l'interface domotique intelligente.

Le brevet ES 2078831, intitulé « Système domotique de contrôle pour une série d'installations et/ou d'appareils électriques », décrit un système domotique très générique dont la particularité est l'utilisation d'un moyen de transmission de trois fils de longueur indéfinie dont l'objet est de simplifier l'installation du système. La conception du système est différente de celle de cette demande, en particulier en ce qui concerne la sécurité de contrôle des éléments du logement par l'utilisateur dans le cas où le système domotique chuterait.

Ces derniéres années, on a étendu l'utilisation du réseau électrique du logement à un canal physique pour établir un réseau de communication de façon à éviter l'installation d'un cablâge supplémentaire qui augmenterait les coûts du système. Ce type de systèmes s'appelle Système PLC (Power Line Communications). Dans ces systèmes on utilise le réseau électrique de courant alternatif comme canal physique de transmission d'informations entre les dispositifs domotiques. Pour minimiser l'interférence des signaux de puissance on envoie l'information modulée sur une porteuse de fréquence un peu plus haute que celle de la tension alternative et superposée près des zones de croisement à zéro de celle-ci. De plus, on implémente des protocoles spécifiques, ouverts ou propriétaires, pour minimiser ces interférences et garantir l'envoie et la réception des messages. Plusieurs brevets d'invention ont été accordés par rapport à ces systèmes, et par rapport aux spécifications de la couche physique des protocoles des communications en ligne de puissance (PLC), où les conceptions des modulateurs, des dèmodulateurs, des convertisseurs, des philtres, des détecteurs de signal, des synchroniseurs, etc. se sont concentrés et aussi par rapport au secteur d'applications. Des exemples récents font référence à cette étude comme le brevet d'invention US 6750781B1, intitulé « Appliance, Control System Utilizing Bidirectional power line Communications », accordé à Kim le 15 juin 2004, et le brevet US 6759946B2, intitulé « Home Appliance network », attribué à Mitsubishi Electric Research Laboratorios, Inc. Le 6 juillet 2004. ces deux brevets font référence à un système domotique PLC mais de deux points de vues différents. Le premier brevet mentionné, US 6750781B1, a pour objet d'invention une amélioration du système domotique PLC conventionnel. Concernant l'invention qui s'analyse et en général tous ces systèmes domotiques PLC, il existe des différences fondamentales avec l'objet de cette demande qui sont :
- Les protocoles qui implémentent, qu'ils soient ouverts ou propriétaires, ne sont pas compatibles directement avec les protocoles TCP/IP et en particulier avec le réseau internet, et exige une interface d'adaptation supplémentaire pour sa connexion à un réseau IP.
- On exige un dispositif de contrôle, dénommé contrôleur, pour chaque point que l'on souhaite inclure dans le réseau domotique. Par conséquent, la conception générale des systèmes PLC est un contrôleur par point et ne s'implémentent pas contrôleurs multiples, ce qui augmente considérablement le coût de l'installation. Dans le cas de cette invention, le système modulaire contrôle plusieurs points de réseau à travers les caisses de distribution du réseau électrique.
- Un système domotique PLC exige une installation de mécanismes particuliers dans le réseau électrique, à la place des « prises », « interrupteurs simples », « interrupteurs conmutés », etc. conventionnels. Par conséquent, les systèmes PLC ne peuvent pas être implémenter sur un réseau électrique conventionnel sans remplacer tous les mécanismes par d'autres mécanismes particuliers. Dans le système domotique objet de cette demande les mécanismes particuliers ne sont pas nécessaires et même dans le cas où il faut changer de mécanisme, il peut être remplacé par un mécanisme comportant les caractéristiques conventionnelles.
- Pour les systèmes PLC qui utilisent ces mécanismes particuliers, si un probléme surgit et provoque le non fonctionnement de l'un de ces mécanismes, il entraine également le non fonctionnement du point principal de réseau et l'utilisateur ne peut rien faire ni même manuellement. Pour les systèmes domotiques objet de cette demande, si un problème surgit dans le système domotique il n'empêche pas le contrôle conventionnel des points du réseau électrique et des dispositifs auxquels ils sont connectés.
- L'utilisateur n'a pas de liberté dans le choix de l'interface pour le contrôle du systéme domotique. En général, pour ce type de systèmes, chaque fabricant développe des commandes de contrôle lointain qui ne sont pas nécessairement compatibles entre eux. Pour le système objet de cette demande, et grace á la conception de son design, l'utilisateur peut choisir toutes les interfaces qui soient compatibles avec le réseau internet. De plus, il n'est pas nécessaire d'incorporer dans ces interfaces des programmes propriétaires conçus spécialement pour le contrôle des foyers. Un programme navigateur d'internet d'utilisation conventionnelle est suffisant.
- Le contrôle des dispositifs se réalise par l'envoi de messages. Cela rend difficile l'opération pour l'utilisateur qui doit se rappeler les messages de contrôle, ce qui devient très complexe lorsque les contrôleurs sont nombreux.
- le système qui s'analyse est limité à 225 contrôleurs par foyer. Pour le système domotique objet de cette demande, la limite des dispositifs est fixé par le réseau internet.
   Concernant le brevet US 6759946B2 mentionné en second lieu, l'objectif de cette dernière est d'établir une interface entre un dispositif téléphonique lointain et un réseau PLC ou les dispositifs sont reliés au réseau électrique. L'objectif de l'invention est différent de l'objectif de cette demande, même si elles ont un point commun qui est la spécification d'une interface entre les dispositifs à contrôler et un système de communication. Dans le brevet qui s'analyse, le système domotique existant est un réseau basé sur le propriétaire X10. Il est précisé que la méthode de conversion entre le niveau d'application de l'utilisateur et les trames du réseau physique dans les communications sur les lignes de puissance. Par conséquent, l'objectif de l'invention est nettement différent de celui de cette demande. Dans l'analyse qui se fait, sa mention est approprié pour inclure les systèmes domotiques basé sur X10. Comme il a été déjà précisé auparavant, ces systèmes sont basés sur des protocoles propriétaires, ce qui constitue une différence fondamentale avec le système objet de cette invention. De cette différence, une série d'inconvénients découlent concernant l'objet de cette demande et qui ont été expliqués tout au long de cette analyse et que l'on évitera de répéter.

L'analyse précédente a permis de mettre en évidence quelques caractéristiques fondamentales et différentielles de l'objet de cette invention, qui ne se limitent pas aux brevets mentionnés mais qui sont en majorité générales aux systèmes existants actuellement. Une description détaillée de l'invention mettra en évidence des caractéristiques différentielles supplémentaires qui font de l'objet de cette demande un système domotique complet comportant des avantages notoires concernant la facilité et la simplicité de l'installation, un coût faible de maintenance, une extension des services et une fonctionnalité concernant les systèmes domotiques existants.

### DESCRIPTION DE L'INVENTION

Le système objet de l'invention, qui se recueille dans les revendications ci-jointes, est un système modulaire pour un contrôle domotique qui, comme on le verra plus tard plus en détails, se compose de différents modules et dispositifs qui permettent de gérer de façon efficace et sûre les divers éléments qui peuvent être contrôlés dans un foyer. Le design et la conception des différents modules et dispositifs, ainsi que leur mode de connexion avec l'installation électrique et les appareils qui doivent être contrôlés, font apparaître les objectifs suivants :
- Développer un système domotique qui puisse contrôler les dispositifs électriques des différentes installations électriques générales, éclairage, chauffage, climatisation, plomberie, arrosage automatique, sécurité, alarme, communications, etc., d'un foyer moderne comme : interrupteurs, prises de courant, chaudière, pompes à chaleur, alarmes, détecteurs de présence, de gaz, d'inondation, valves électroniques, ventilateurs, systèmes d'ouverture et de fermeture de portes, de fenêtres, de persiennes, de stores et de rideaux, interphones, et des appareils électroménager en général, constitue un objectif prioritaire de l'invention.
- Développer un système domotique qui permette la réalisation du contrôle des dispositifs électriques du foyer sans modifier l'installation électrique, ou en opérant des petits changements qui ne s'éloignent pas de ceux typiques et caractéristiques à l'installation électrique conventionnelle est un objectif prioritaire de l'invention.
- Développer un système domotique qui permette à l'utilisateur de maintenir la totalité du contrôle des dispositifs et des éléments de façon conventionnelle, c'est-à-dire en l'absence de l'installation domotique, même en cas de probléme ou de tombée du système domotique, même lorsqu'il s'agit des modules ou sous-modules qui le compose et du système de contrôle de communication et de gestion est un objectif prioritaire de l'invention. C'est-à-dire, que développer un système qui contrôle les interrupteurs, les prises, et autres actionneurs de charges dans une installation électrique de façon à ce que le contrôle domotique et manuel coexistent, tout en assurant à tout moment le contrôle manuel conventionnel de l'installation par l'utilisateur, même dans le cas d'un problème dans le système domotique est un objectif prioritaire de l'invention.
- Développer un système domotique qui empêche la mise en marche simultanée du contrôle manuel et domotique, dans ces cas de charges spécifiques où une action simultanée et opposée, comme pour les cas de moteurs à deux sens de roulement qui s'utilisent pour mettre en marche des persiennes, des stores, des rideaux, etc., peuvent porter préjudice au système est aussi un autre objectif prioritaire de l'invention.
- Développer un système domotique qui utilise, comme base de communication, des protocoles de communication standard, mais pas propriétaires, qui soient compatibles avec les réseaux de données TCP/IP existantes, en particulier avec le réseau internet est un autre objectif prioritaire de l'invention. Ainsi, le système domotique se configure comme un système ouvert, indépendant de la technologie des communications ou du moyen de transmission utilisé, si celui-ci est un câble conforme avec le Standard IEEE 802.3, ou si celui-ci est sans fil conforme avec le standard IEEE 802.11 et ses autres variantes, par radiofréquence (RF) ou par courant porteur (PLC).
- Développer un système domotique qui intègre un ou, si cela est nécessaire, plusieurs dispositifs, qui rendent possible la gestion et le contrôle général du système domotique au moyen d'un logiciel d'application spécifique. Ces dispositifs seront nommés « points de contrôle ». Ceci est un autre objectif prioritaire de l'invention.
- Les points de contrôle doivent pouvoir s'intégrer au système domotique quelque soit le point d'accès, avec ou sans câble, du réseau de communication qui s'intégre au système. Ceci est un autre objectif prioritaire de l'invention.
- Développer un système domotique dans lequel l'intégration d'un point de contrôle n'implique pas la reprogrammation du système, ni d'aucun des modules ni des sous-modules préexistants est un autre objectif prioritaire de l'invention. Un autre objectif prioritaire est que l'intégration du point de contrôle au système domotique doit se réaliser sous le concept de « connecter et prêt » et doit impliquer les actions suivantes :
   1.- Le point de contrôle interroge le système domotique à la recherche de dispositifs existants connectés au système domotique ;
   2.- Le point de contrôle reçoit de chaque dispositif des informations sur son propre code d'identification dans le réseau de communication, sur les services qu'il intègre et sur la façon de les gérer et des renseignements qu'il fournit.
   3.- Le point de contrôle intègre automatiquement chaque dispositif installé, tout en rendant possible sa gestion et son contrôle. Le point de contrôle se prépare à recevoir toute donnée que les dispositifs intégrés puissent envoyer ; et
   4.- Le point de contrôle reçoit et intègre l'information concernant l'adresse du réseau où on peut avoir accès à la page de description et de contrôle de chaque dispositif.
- Développer un système domotique dont l'extension n'implique pas la reprogrammation d'aucun des modules existants, ni du système central ou du point de contrôle. L'installation d'un nouveau dispositif
ou service doit être aussi simple que « connecter et prêt ». De cette façon le système obtient des informations, à tout moment, concernant tous les dispositifs et services qui sont disponibles, tout en identifiant les nouvelles intégrations et abandons. Ceci est un autre objectif prioritaire de l'invention.
- Un autre objectif prioritaire est de développer un système domotique dans lequel, un nouveau module, lorsque l'on installe sous le concept « connecter et prêt », réalise les actions suivantes :
   1.- Le nouveau dispositif ou service reçoit ou s'attribue automatiquement un code qui l'identifie dans le système domotique.
   2.- Le nouveau dispositif installé informe le système domotique des services qu'il intégre, indique également au système central ou au point de contrôle comment le gérer et quelles informations il peut fournir.
   3.- Après cette étape, le système central ou le point de contrôle intègre automatiquement le nouveau dispositif tout en permettant le contrôle et en étant prêt à recevoir quelconque information de ce dernier.
   4.- Le dispositif transmet égalemant au systéme domotique et au point de contrôle l'adresse du réseau où se trouve sa propre page de contrôle et de description.
      Ce protocole d'actions décrit doit être ouvert, un exemple, non limitatif, de ce dernier est le protocole Universal Plug and Play (UpnP).
- Développer un système domotique dans lequel l'utilisateur puisse choisir librement des dispositifs commerciaux, d'usage courant, pas nécessairement propriétaires, pour accéder au système et le contrôler. Parmi ces dispositifs d'usage courant il convient de dégager les suivants : ordinateur personnel (PC), assistant numérique personnel (Personal Digital Assistant - PDA), téléphone portable, écran tactile, etc., est un autre objectif prioritaire de l'invention.
- Développer un système domotique qui soit modulaire, qui permette de s'adapter facilement à la situation concrète à laquelle cela s'applique et à ces besoins. Cette modularité doit faciliter les tâches de maintenance et de réparation, ainsi que les tâches d'amélioration du système, puisque l'on peut entreprendre de refaire le design de l'un des modules sans que le reste des modules en soient affecter est un autre objectif prioritaire de l'invention.

Concernant ces objectifs le système intégre, en quantité pas nécessairement unitaire, les dispositifs suivants, modules et sous-modules :
1.- Ordinateur, ou circuit d'application spécifique, qui intégre un logiciel d'application conçu pour la gestion et le contrôle général du système domotique et qui agit comme point de contrôle ;
2.- Dispositifs de contrôle pour l'utilisateur (PDA, télécommande, téléphone portable, écran tactile, ordinateur, etc.)
3.- Module base de contrôle intelligent ;
4.- Sous-module d'accès sans câble ;
5.- Sous-module de mise en marche et de contrôle des charges ;
6.- Sous-module de capteurs ;
7.- Sous-module de téléphonie mobile ;
8.- Sous-module régulateur de puissance électrique (dimmer) ;
9.- Sous-module de clavier et d'écran ;
10.- Sous-module d'alimentation ;
11.- Sous-module d'accès par radiofréquence ;
12.- Sous-module capteur de température ;
13.- Dispositif de concentration de communications ;
14.- Dispositif de mise en marche des communications ;
15.- Dispositif de vidéo surveillance ;
16.- Module interface de vidéo portier ;
17.- Dispositif serveur d'audio vidéo ; et
18.- Dispositif reproducteur d'audio vidéo.

Le système domotique qui est proposé est configuré comme un réseau de communication. Différents dispositifs, connectés au réseau de communication, coexistent, pas en quantité nécessairement unitaire. Parmi tous ceux-là il y a un système qui agit comme un point de contrôle et qui est constitué, par exemple, d'un ordinateur programmé pour gérer et contrôler globalement le système domotique et pour que lorsque la mention « connecter et prêt » est intégré au système, il puisse réaliser les opérations suivantes :
1.- Le point de contrôle interroge le réseau de communication à la recherche de dispositifs existants installés dans le système domotique ;
2.- Le point de contrôle reçoit de chaque dispositif installé des informations sur son propre code d'identification dans le réseau de communication, sur les services qu'il intègre et sur la façon de les gérer et des renseignements qu'il fournit.
3.- Le point de contrôle intègre automatiquement chaque dispositif installé, tout en rendant possible sa gestion et son contrôle. Le point de contrôle se prépare à recevoir toute donnée que les dispositifs intégrés puissent envoyer ; et
4.- Le point de contrôle reçoit et intègre l'information concernant l'adresse du réseau où on peut avoir accès à la propre page de description et de contrôle de chaque dispositif.
Connectés au réseau de communication, il y a aussi, en quantité pas nécessairement unitaire : un concentrateur de communication, un ou plusieurs points d'accès sans fil, des serveurs vidéo et audio, des systèmes de vidéo surveillance, des systèmes de portier vidéo traditionnels, des dispositifs de contrôle tels que PDA, des télécommandes,et., ils sont tous conçus pour se propager sur le réseau par un protocole TCP/IP standard de communication et compatible avec Internet. Cette capacité à se propager par le protocole internet IP est maintenue par les dispositifs, parce qu'ils ont été conçu dans ce but ou parce que l'on a ajouté des modules de conversion dans ce but ; par exemple, dans ce cas on connecte à un portier vidéo conventionnel un module qui agit comme une interface de réseau capable de convertir les signaux vidéo composés et audio analogique en signaux codifiés et comprimés de façon à être transférés par le moyen de transmission et grâce au protocole de communication IP. Ainsi, ce module permet d'intégrer le portier vidéo coventionnel comme un dispositif supplémentaire du réseau sous le concept de « connecter et prêt » indiqué précédemment, dans lequel on y ajoute les actions, déjà mentionnées, suivantes : 1) identification automatique, 2) information sur les services et le mode de gestion au point de contrôle, 3) envoi d'informations au point de contrôle, et 4) d'informations concernant l'adresse de la propre page de description et de contrôle du dispositif. Ainsi, cette interface transforme le vidéo portier conventionnel en un dispositif supplémentaire du réseau domotique permettant le contrôle complet de celle-ci et à travers d'un réseau de communication par protocole IP.

Les modules base de contrôle intelligents objet de l'invention sont aussi connectés au réseau. Ces modules ont la capacité d'entrer en communication avec le reste des dispositifs à travers le réseau. Les modules base de contrôle intelligents intégre un protocole ouvert qui leur permet de se découvrir sur le réseau et d'executer un procédé par lequel se réalisent les actions suivantes :
1.- Le module base de contrôle intelligent, lorsqu'il se connecte au réseau, reçoit ou s'attribue automatiquement un code qui l'identifie dans celui-ci.
2.- Le module base de contrôle intelligent, à travers le réseau, informe le point de contrôle et les dispositifs intégrés des services qu'il intégre, indique également comment les gérer et quelles informations il peut fournir.
3.- Après cette étape, le module base permet de réaliser son contrôle et le contrôle du système modulaire auquel le module base est intégré, tout en envoyant au réseau l'information qu' il doit fournir concernant le point précédent.
4.- Le module base de contrôle intelligent transmet également l'adresse du réseau au point de contrôle où se trouve sa propre page de contrôle et de description du système modulaire auquel le module base est intégré.

Ce protocole d'actions décrit doit être ouvert, un exemple, non limitatif, de ce dernier est le protocole Universal Plug and Play (UpnP).

Les modules base de contrôle servent comme liens intelligents entre le réseau de communication et des dispositifs et éléments de l'installation électrique qui doit être contrôlée. Pour ce faire, les modules base peuvent s'installer dans les caisses de distribution électrique du foyer qui servent à distribuer l'énergie électrique vers les différents dispositifs du foyer, tels que : des prises, des interrupteurs, des lumières, des moteurs de persiennes, des stores et des rideaux, des valves électroniques, etc. Le module base de contrôle s'alimente à travers le sous-module d'alimentation, qui est tout d'abord connecté à la tension électrique de 110-240 Volts du réseau de distribution électrique du foyer, et ensuite au module base à travers les connecteurs que celui-ci incorpore dans ce but. Le sous-module d'alimentation fournit une tension et un courant continus aux valeurs appropriées pour le bon fonctionnement du module base et des sous-modules qui sont connectés à ce dernier.

Le module base gère le contrôle des différents dispositifs et des éléments de l'installation électrique que l'on veut ajouter au réseau domotique. Cette gestion peut être réalisée de façon autonome ou à travers le point de contrôle et executée finalement à travers différents sous-modules, qui sont aussi objet de l'invention, et qui ont été spécialement conçus dans ce but. Ces sous-modules, qui sont décrits plus en détails plus bas, sont connectés tout d'abord au module base duquel ils reçoivent l'alimentation, et ensuite aux différents dispositifs et éléments à contrôler.

Le module base peut se construire de façon compacte en ajoutant un
ou plusieurs sous-modules pour former un seul module dont les caractéristiques sont les caractéristiques rassemblées du module base et de celles de chacun des sous-modules qui le composent. Ainsi, la modularité du système est une option avantageuse mais pas limitative du système objet de l'invention.

Le module base de contrôle peut aussi recevoir des données venant du réseau domotique ou de l'extérieur à travers des sous-modules de communications avec ou sans fil qui sera détaillé plus loin avec les sous-modules.

Le contrôle domotique de dispositifs et éléments de l'installation électrique se gère au moyen du module base et par de deux sous-modules de réglage de puissance électrique (dimmer).

Le sous-module de mises en marche et de contrôle des charges est connectée tout d'abord au module base duquel il reçoit les ordres et l'alimentation, et ensuite il est connecté au dispositif ou élément à contrôler. Le mode de connexion entre le sous-module de mises en marche et de contrôle des charges et les éléments à contrôler est spécifique à chaque type d'élément, de façon à ce que ce mode de connexion rende possible un des objectifs prioritaires de l'invention, qui est de maintenir la co-existence entre le contrôle manuel conventionnel de l'utilisateur et le contrôle domotique même dans le cas d'une défaillance totale du système domotique.

L'objet de l'invention se rapporte aussi, par conséquent, à la connexion entre le sous-module de mises en marche et le contrôle des charges et le dispositif ou élément à intégrer dans le système domotique. Ce mode de connexion dépend de l'élément à controler. Pour cette invention on distingue trois types d'éléments à controler avec un des sous-modules de mises en marche et de contrôle des charges. Ces éléments, à leur tour, fournissent l'énergie électrique à plusieurs dispositifs ou appareils dans un foyer conventionnel. Ces éléments sont : des prises, des interrupteurs simples et un ensemble d'interrupteurs de commutation.

Pour intégrer le contrôle d'un élément « prise » du réseau électrique dans le systéme domotique objet de l'invention, il faut une connexion entre les différentes parties du système et l'élément à controler, qui s'inclue aussi en tant qu'objet de l'invention et qui est caractérisé pour les raisons suivantes :
- un sous-module de mises en marche et de contrôle des charges est connecté au module base de contrôle intelligent, situé dans la boite de distribution, à travers un des connecteurs qui sont prévus à cet effet ;
- le fil de phase qui va jusqu' à la boite de distribution est connectée à l'entrée de phase du sous-module de mises en marche ;
- la première sortie de phase du sous-module de mises en marche est connectée à une terminale sélectionnée de la prise ;
- le régime de neutre qui va jusqu' à la boite de distribution est connecté à l'autre terminal de la prise ;
- le fil de terre qui va jusqu'à la caisse de distribution, dans le cas
où il y en a un, est connectée au terminal de terre de la prise.

Pour intégrer le contrôle d'un élément « interrupteur simple » du réseau électrique dans le système domotique objet de l'invention, de façon à ce que si un problème surgit dans le système domotique, il n'empèche pas le contrôle manuel des éléments du réseau électrique à controler, il est nécessaire de remplacer l'interrupteur simple par un interrupteur de commutation, qui s'inclue aussi en tant qu'objet de l'invention et qui est
caractérisé pour les raisons suivantes :
- un sous-module de mises en marche et de contrôle des charges est connecté au module base de contrôle intelligent, situé dans la boite de distribution, à travers un des connecteurs qui sont prévus à cet effet ;
- le fil de phase qui va jusqu' à la boite de distribution est connectée à l'entrée de phase du sous-module de mises en marche ;
- la première sortie de phase du sous-module de mises en marche est connectée à une des terminales de commutation de l'interrupteur de commutation ;
- la seconde sortie de phase du sous-module de mises en marche est connectée à l'autre terminal de commutation de l'interrupteur de commutation ; et
- le fil provenant de la charge est connecté au terminal commun de l'interrupteur de commutation.

Pour intégrer le contrôle d'un « ensemble d'interrupteurs de commutation » dans le système domotique objet de l'invention, de façon à ce que si un problème surgit dans le système domotique, il n'empêche pas le contrôle manuel des éléments du réseau électrique à controler, il est nécessaire de remplacer un des interrupteurs de commutation par un interrupteur de croisement et il faut une connexion entre les différentes parties du système, entre l'interrupteur de croisement et l'interrupteur de commutation qui n'a pas été remplacé, qui s'inclue aussi en tant qu'objet de l'invention et qui est caractérisé pour les raisons suivantes :
- un sous-module de mises en marche et de contrôle des charges est connecté au module base de contrôle intelligent, situé dans la boite de distribution, à travers un des connecteurs qui sont prévus à cet effet ;
- chacun des deux terminals de commutation de l'interrupteur de commutation sont connectés, respectivement, à chacune des sorties de l'interrupteur de croisement ;
- le fil de phase qui va jusqu' à la boite de distribution est connectée à l'entrée de phase du sous-module de mises en marche ;
- la première sortie de phase du sous-module de mises en marche est connectée à un des terminals d'entrée de l'interrupteur de croisement ;
- la seconde sortie de phase du sous-module de mises en marche est connectée à l'autre terminal d'entrée de l'interrupteur de croisement ; et
- le fil provenant de la charge est connecté au terminal commun de l'interrupteur de commutation.

L'intégration du contrôle des deux interrupteurs simples ou de deux boutons-poussoirs qui s'utilisent ensemble pour alimenter des charges spécifiques, comme c'est le cas des moteurs à roulement à doule sens, dans le système domotique objet de l'invention, est considéré à part dans le but de maintenir un des objectifs prioritaires de cette dernière, qui est d'apporter une sécurité dans le cas ou une mise en marche simultanée et opposée du contrôle domotique et manuel porte préjudice à ces charges. Dans cette situation, l'invention établit une connexion entre les différents éléments qui interviennent, c'est-à-dire la charge et les interrupteurs ou les boutons-poussoirs, qui est également un objectif de l'invention, et qui est caractérisé pour les raisons suivantes :
- deux sous-modules de mises en marche et de contrôle de charges, que nous appellerons A et B, sont connectés au module base de contrôle intelligent, situé dans la boite de distribution, à partir de deux des connecteurs qui sont prèvus à cet effet ;
- un terminal de l'un des interrupteurs ou bouton-poussoir est connecté à l'un des terminals de l'autre interrupteur ou bouton-poussoir ;
- les terminals communs, rassemblés dans l'étape précédente, sont connectés à la première sortie de phase du sous-module B ;
- le fil de phase qui va jusqu'à la boite de distribution est connecté à l'entrée de phase du sous-module A ;
- la première sortie de phase du sous-module A est connecté à l'entrée de phase du sous-module B ;
- la seconde sortie de phase du sous-module A est connectée à l'un des terminals non communs de l'un des interrupteurs ou bouton-poussoir ;
- la seconde sortie de phase du sous-module A est aussi connectée à l'un des terminals de la charge ;
- la seconde sortie de phase du sous-module B est connectée à l'autre terminal non commun de l'autre interrupteur ou bouton-poussoir ;
- la seconde sortie de phase du sous-module B est aussi connectée à l'autre terminal de la charge ; et
- le fil de neutre est connecté au terminal de la charge prévu à cet effet.
Le sous-module de réglage de puissance électrique (dimmer),objet de cette invention, est un dispositif qui intégre une certaine intelligence électronique et qui est connecté d'une part au module base et d'autre part au dispositif ou élément à maitriser. Le sous-module « dimmer » permet de maitriser la puissance fournie à une charge électrique, en général à l'éclairage. Ce contrôle peut être réalisé de façon manuel ou domotique, pour cela, le sous-module « dimmer » maintient une communication vers deux directions avec le module base, en lui donnant des informations sur les actions que l'utilisateur réalise à travers le point de contrôle, ou des dispositifs de contrôle pour l'utilisateur, que le systéme peut intégrer à cette fin.

Le sous-module « dimmer », objectif de l'invention, maintient le contrôle manuel sur la puissance fournie à la charge de l'éclairage, même dans le cas d'une faille du module base de contrôle intellignet et même de faille ou tombée totale du système domotique, toujours est il quand le sous-modules « dimmer » maintient l'alimentation et fonctionne bien.

Le sous-module « dimmer », qui peut se mettre autant dans la boite de distribution avec le module base que dans la boite du mécanisme avec le bouton-poussoir manuel, exige une connexion entre des différentes parties du système et la charge dont la puissance doit être maitrisée, qui s'inclue aussi en tant qu'objet de l'invention et qui est caractérisé pour les raisons suivantes :
- un sous-module « dimmer » est connecté au module base de contrôle intelligent, situé dans la boite de distribution, à travers un des port série qui sont prévus à cet effet ;
- le fil de phase qui va jusqu'à la boite de distribution est connecté à l'entrée de phase du sous-module « dimmer » ;
- la sortie de phase du sous-module « dimmer » est connectée à la charge de l'éclairage ;
- chacun des terminals du mécanisme poussoir ou interrupteur qui s'utilise pour le contrôle manuel, est connecté, respectivement, à chacune des deux entrées de contrôle du sous-module « dimmer » ; et
- le fil de neutre qui va jusqu'à la boite à distribution est connectée à l'autre terminal de la charge.
   Le module base de contrôle intelligent peut recevoir des données d'un ensemble fini de capteurs répandus dans le foyer ou l'aire à rendre domotique et exécuter des actions de contrôle en fonction des données reçues des capteurs. Les signaux fournis par les capteurs vont jusqu'au module base à travers le sous-module des capteurs. Le sous-module de capteurs, qui reçoit l'alimentation du module base, intégre une certaine intelligence électronique et établit une communication vers deux directions avec le module base, à travers un port que celui-ci intégre à cette fin. Le module de base, lorsqu'il débute, grâce à cette communication qui va dans deux directions, interroge le sous-module de capteurs et celui-ci le renseigne sur l'état des capteurs connectés à ce dernier. Une fois initialisé, le sous-module de capteurs lui communique tout changement dans les signaux provenant des capteurs.
   Le module base peut recevoir et envoyer des données à travers le sous-module du clavier et de l'écran qui reçoit aussi l'alimentation du module base. Ce sous-module intégre une certaine intelligence électronique et établit une communication vers deux directions avec le module base, à travers un port que celui-ci intégre à cette fin. Le sous-module du clavier et de l'écran permet d'introduire des données gràce au clavier et de faire apparaître les messages à l'écran. Le module base reçoit ces données et peut agir de façon autonome en fonction d'eux et selon le programmation.
   Le module base intègre aussi des entrées analogiques qui permettent de connecter des capteurs qui donnent des signaux de variation continue, par exemple un capteur à température qui fournisse une tension continue à une valeur proportionnelle à la température de la salle qui a besoin d'un moniteur. Le module base alimente, à son tour, ces types de capteurs.
   Le module base de contrôle peut recevoir des données d'origine lointaine grâce à deux sous-modules : le sous-module d'accès par radiofréquence et le sous-module de téléphonie mobile.
   Le sous-module d'accès par radiofréquence, objet de l'invention, qui est aussi connecté au module base et duquel il reçoit l'alimentation, intègre une certaine intelligence électronique et établit une communication vers deux directions avec le module base, à travers un port que celui-ci intégre à cette fin. Le sous-module d'accès par RF peut agir comme récepteur/émetteur de dispositifs lointains qui établissent la communication dans les deux directions avec ce dernier de façon approprié et à temps voulu. Le sous-module d'accès par RF peut interroger ces dispositifs et recevoir des données de ceux-ci tout en étant capable d'agir en fonction des données reçues.
   Le sous-module de téléphonie mobile intégre une certaine intelligence électronique et établit une communication vers deux directions avec le module base, à travers un port que celui-ci intégre à cette fin. Le sous-module de téléphonie mobile permet le contrôle domotique du système gràce aux dernières technologies de communication mobiles (GSM, GPRS, UMTS, etc.). Ce sous-module permet à un utilisateur, à travers un dispositif de téléphone portable de dernière génération, d'envoyer des ordres de contrôle qui seraient reçus par le module base de contrôle. Celui-ci pourrait agir de façon autonome d'après les ordres reçus
ou envoyer ces ordres vers un dispositif du réseau comme, par exemple, le point de contrôle qui agirait en fonction de ces dernières et d'après ce qui a été programmé.

Les objectifs et la description générale réalisés de l'objet de l'invention, sont directement en accord avec ces avantages différentiels.
- La solidité du système de cette invention constitue un avantage puisque l'intelligence est répartie dans les différents modules et sous-modules qui le compose, en évitant que la complexité ne soit uniquement que du côté central, qui dans ce cas un problème provoquerait le non fonctionnement du système entier.
- Le fait qu'un système de communication distribué, dont les modules base intelligents sont conçus pour accéder au canal et communiquer par eux-mêmes à quelconque autre noeud du réseau, sans avoir besoin d'une unité centrale qui contrôle l'accès au canal de transmission constitue un autre avantage de cette invention.
- Un dysfonctionnement du système domotique complet n'empêche pas le contrôle manuel conventionnel des dispositifs par l'utilisateur, grâce à la connexion entre les différentes parties du système et les éléments du réseau électrique à maitriser, et cela constitue un avantage fondamental de cette invention.
- L' installation de cette invention n'entraine pas nécessairement des modifications dans l'installation électrique conventionnelle ; et dans le cas où cela est nécessaire, ces modifications ne s'éloignent pas de ceux qui sont habituels à une installation aux caractéristiques communes ce qui constitue un autre avantage fondamental.
- Par conséquent, le fait que l'installation de cette invention peut être effectuèe par des techniciens habitués à faire des installations électriques conventionnelles sans avoir besoin d'assimiler des connaissances différentes à celles qu'ils ont déjà constitue un avantage.
- La structure de l'installation, conçue de façon à ce que les modules intelligents de contrôle s'intègrent dans les caisses de distribution électrique du foyer, donne une grande versabilité au système et facilite son extension. Ainsi, le contrôle de plusieurs dispositifs ou charges avec un seul module base intelligent, offre une structure multiple en forme d'étoile qui simplifie le cablâge. Cela constitue un avantage important de cette invention.
- Le fait que l'intégration de nouveaux dispositifs est aussi simple que « connecter et prêt », et n'exige pas la reprogrammation d'aucun module préexistant dans le système et, par conséquent, ne requiert pas de connaissances supplémentaires pour l'utilisateur, constitue encore un autre avantage fondamental.
- Le fait que le systéme de cette invention soit ouvert et ait la capacité d'intégrer des nouveaux dispositifs et services d'autres fabricants qui sont compatibles avec le protocole ouvert utilisé constitue un autre avantage important.
- Le système domotique est directement compatible avec le réseau internet, et ne requiert pas d'interfaces spécifiques, c'est-à-dire de différentes à celles qui sont utilisées pour connecter un réseau IP à internet, qui rende possible la connexion dans les deux sens, c'est-à-dire entre le système et internet et entre internet et le système. Ainsi, le systéme peut être controlé à partir de tout point d'internet en accédant à l'adresse appropriée et après s'être identifié comme utilisateur à l'accés permis. Cela constitue un avantage fondamental de cette invention.
- Les procédures de maintenance et de réparation peuvent être réalisées très rapidement et facilement grâce à la conception du système modulaire. Ainsi, cette modularité fait en sorte que le système peut s'adapter facilement aux besoins à combler, ce qui constitue un avantage fondamental de cette invention.
- La conception du système domotique, sur des standards ouverts de communication, permet à l'utilisateur de choisir tout dispositif commercial, pas nécessairement propriétaire, qui soit compatible avec ces standards, afin de controler et gérer le système. Ainsi, l'utilisateur a la liberté de choisir un ordinateur personnel, un PDA, un téléphone portable, un écran tactile, ou tout autre dispositif qui soit compatible avec internet et qui puisse s'intégrer dans un réseau de communication sur le protocole standard TCP/IP, pour controler le système domotique. En général, les systèmes domotiques commerciaux possèdent des dispositifs particuliers, tels que des télécommandes, qui intégrent des protocoles propriétaires, pour effectuer le contrôle. Cela constitue in avantage important de cette invention. Donc, grâce au design conçu sur des protocoles ouverts et standards de communication, le système offre une grande compatibilitè et versatibilité ce qui constitue un avantage fondamental.

### DESCRIPTION DES DESSINS

Pour compléter la description qui se fait et dans l'objectif de proposer une meilleure compréhension des caractéristiques de l'invention, en accord avec un exemple à une application semblable, cette description comporte un ensemble de dessins qui ont un caractère illustratif mais pas limitatif et qui représente ceci :
Le schéma 1.- Il représente schématiquement l'installation domotique qui est proposée où le système modulaire de contrôle intelligent est intégré.
Le schéma 2.- Il représente une partie du système modulaire domotique qui comporte le bloc diagramme du module de base de contrôle intelligent, le sous-module d'alimentation, ainsi que d'autres sous-modules qui peuvent se connecter au module base.
Le schéma 3.- Il reprèsente le bloc diagramme du sous-module de mises en marche et de contrôle des charges objet de l'invention.
Le schéma 4.- Il représente le bloc diagramme du sous-module des capteurs objet de l'invention.
Le schéma 5.- Il représente le bloc diagramme du sous-module de réglage de puissance électrique objet de l'invention.
Le schéma 6.- Il représente le bloc diagramme du sous-module du clavier et de l'écran.
Le schéma 7a.- Il représente, schématiquement, l'installation et la connexion électrique conventionnelles d'un point « prise » du réseau électrique.
Le schéma 7b.- Il représente, schématiquement, l'installation électrique et la connexion nécessaires pour intégrer le contrôle d'un point « prise » du réseau électrique, dans le système domotique modulaire objet de l'invention.
Le schéma 8a.- Il représente, schématiquement, l'installation électrique et la connexion conventionnelles d'un point « interrupteur simple» du réseau électrique, dans le système domotique modulaire objet de l'invention.
Le schéma 8b.- Il représente, schématiquement, l'installation électrique et la connexion nécessaires pour intégrer un point « interrupteur simple» du réseau électrique, dans le système domotique modulaire objet de l'invention.
Le schéma 9a.- Il représente, schématiquement, l'installation électrique et la connexion conventionnelles d'un ensemble d' « interrupteurs commutés» du réseau électrique.
Le schéma 9b.- Il représente, schématiquement, l'installation électrique et la connexion nécessaires pour intégrer le contrôle d'un ensemble d' « interrupteurs commutés» du réseau électrique, dans le système domotique modulaire objet de l'invention.
Le schéma 10a.- Il représente, schématiquement, l'installation électrique et la connexion conventionnelles d' interrupteurs ou bouton poussoir qui maitrisent un moteur à double sens de roulement.
Le schéma 10b.- Il représente, schématiquement, l'installation électrique et la connexion nécessaires pour intégrer le controle d' interrupteurs ou bouton poussoir qui maitrisent un moteur à double sens de roulement, dans le système domotique modulaire objet de l'invention.
Le schéma 11.- Il représente, schématiquement, l'installation électrique et la connexion du sous-module de réglage de puissance électrique objet de l'invention.
Le schéma 12.- Il représente le bloc diagramme du sous-module de téléphonie mobile.

### REALISATION DE L'INVENTION

Concernant le diagramme schématique de l'installation domotique proposée au schéma 1, différents dispositifs, en quqntité pas nécessairement unitaire, sont connectés à un réseau de communications IP et d'acheminement et/ou de concentration de communications (11). Parmi eux, il y a un point de contrôle caractérisé parce qu'il comprend un ordinateur personnel (12) programmé de façon à ce que lorsqu'il est connecté au réseau de communication de l'installation domotique, il mette en marche les actions suivantes :
1.- Le point de contrôle interroge le système domotique à la recherche de dispositifs existants installés dans le système domotique ;
2.- Le point de contrôle reçoit et stocke les informations sur le code d'identification, dans le réseau de communication, sur les services qu'il intègre et sur la façon de les gérer et des renseignements qu'il fournit, de chaque dispositif.
3.- Le point de contrôle intègre automatiquement chaque dispositif du réseau, tout en rendant possible sa gestion et son contrôle. Ainsi, le point de contrôle se prépare à recevoir toute donnée que les dispositifs intégrés puissent envoyer ; et
4.- Le point de contrôle reçoit et intègre les informations concernant l'adresse du réseau où on peut avoir accès à la propre page de description et de contrôle de chaque dispositif installé dans le réseau du système domotique.
   On connecte également au réseau de communication, et au moyen du concentrateur (11) : un dispositif d'accès sans fil qui agit avec un protocole TCP/IP (13), un portier vidéo (13) qui est connecté à une carte interface (17) qui s'incorpore au vidéo portier, avec ses services d'image, audio et télécommande de mise en marche et de contrôle d'accès, comme un dispositif supplémentaire du réseau domotique IP, un serveur vidéo IP (18) et un reproducteur vidéo IP (19). Chacun de ces dispositifs est relié au concentrateur (11), par les fils (21, 22, 23 et 24) qui font partie du cablâge du réseau de communication IP.
   On connecte également au réseau de communication IP un point d'accès sans fil (13), les dispositifs suivants : un PDA (Personal Digital Assistant) (14) et un dispositif de vidéo surveillance IP (15).

A ce réseau de communication, par le moyen de deux fils (20 et 25) et connectés au dispositif concentrateur (11), il y a deux systèmes modulaires de contrôle domotique, objet de l'invention, composés, en quantité pas nécessairement unitaire, par les modules et sous-modules suivants :
- Module base de contrôle (1).
- Sous-module d'alimentation (2).
- Sous-module de capteurs et radiofréquence (3).
- Sous-module de mise en marche et de contrôle des charges (4).
- Sous-module régulateur de puissance électrique (dimmer) ;
- Sous-module de réglage de puissance électrique (dimmer) (5).
- Capteur de température (6).
- Sous-module de téléphonie mobile (7).
- Sous-module de clavier et d'écran (8).
   Le système modulaire décrit précédemment, objet de l'invention, sert de pont entre le réseau de communication IP de l'installation domotique, le réseau de téléphonie mobile et les dispositifs capteurs et acteurs qui doivent être gérer et controler. Le point de contrôle (12) permet de gérer et de controler le système domotique. Plus loin, chaque module et sous-module qui constituent le système domotique objet de l'invention sont décrits.

### Module base de contrôle intelligent

Concernant l'objet de l'invention, le schéma 2 montre les différents blocs qui constituent le module base de contrôle intelligent (1). Les fils (20 ou 25) qui relient le module base de contrôle (1) au réseau de communication permettent d'établir un flux de communication vers deux sens entre le module base (1) et le réseau à travers le bloc de communications avancées (33) se charge de la transmission et de la réception de données à une grande vitesse dans le réseau domotique. Il réalise l'adaptation de donnée au canal physique correspondant, qu'il soit avec ou sans fil, par radiofréquence ou par fils porteurs de puissance (PLC - Power Line Communications), la conversion parallèle en série des données à transmettre et vice-versa, se charge également de la dètection de colisions, ainsi que de l'algorithme de retransmission. Un microcontrolateur ou circuit à capacité de programmation et de contrôle (32) dialogue avec le bloc de communication avancées par un bus parallèle (38), tout en écrivant et en lisant les registres que ce dernier posséde. Le microcontrolateur (32) a une architecture de 8 bits, est doté de plusieurs périphériques internes qui lui confère la flexibilité adéquate, des convertisseurs analogiques/numériques, unités de transmission en série, générateur d'interruptions et un nombre déterminé d'entrées et de sorties. Les unités de transmission en série internes du microcontrolateur (32) effectuent la conversion de données parallèle à série, tout en permettant l'envoi et la réception de données pendant que le noyau du microcontrolateur continue à effectuer d'autres tâches. Le générateur d'interruptions informe le microcontrolateur quand l'un des périphériques a terminé la tâche qui lui a été assignée, de façon à ce qu'ils puissent réaliser plusieurs tâches en même temps. Le microcontrolateur (32) est connecté, à travers un bus série (39), à une mémoire EEPROM (35) qui s'utilise pour le stockage des données importantes pour le fonctionnement optimal du système, même quand il se produit une coupure d'électricité. Le microcontrolateur (32) est aussi connecté, au moyen d'un bus aux fils spéciaux (40), à un bloc d'entrées/sorties (36) qui permet de connecter au module base contrôle (1) les sous-modules de mises en marche et de contrôle des charges (4). Le microcontrolateur (32) est aussi connecté, au moyen d'un bus qui va dans deux directions (41), à un ensemble de portes d'entrées/sorties (34) qui permettent de connecter le module base contrôle (1), à différents éléments tels que : des capteurs analogiques qui fournissent un signal de tension proportionnelle à une magnitude physique, comme le capteur de température (6), des capteurs de sorties digitales de communication série (37), et les sous-modules « dimmer » (5), de téléphonie mobile (7), de capteurs (3) et de clavier/écran (8). Le microcontrolateur (32) intégre un programme spécifique conçu de façon appropriée pour controler les différents éléments connectés á celui-ci et au module base (1). Ce contrôle peut être autonome, en fonction du programme intégré, ou dépendant des données reçues par le port de communications avancées (33) et des ports d'entrées/sorties (34). La programmation implémentée dans le microcontrolateur (32) fait en sorte que celui-ci, lorsqu'il s'alimente, mette en oeuvre une procédure d'initialisation qui effectue d'opérations consistant à :
- Assigner de façon automatique, ou accepter de quelques uns des dispositifs intégrés au réseau de communication, un code qui identifiera le système modulaire qui intégre ce module base, dans le systéme domotique ;
- Informer le système domotique des services qu'il intègre, tout en indiquant aussi le point de contrôle et au reste des dispositifs qui sont connectés au réseau, comment les gérer et quelles informations il peut fournir.
- Après cette étape, permettre de réaliser le contrôle du système modulaire, et envoyer par le réseau de communication, l'information qu' il doit fournir concernant le point précédent ; et
- Informer le point de contrôle et le reste des dispositifs qui sont connectés au rèseau, des adresses du réseau où l'on peut avoir accès aux pages de contrôle et de description du module base et des différents services que propose le système modulaire qui intégre ce module base.

Dans la réalisation préférentielle, pas limitative, qui se décrit, les actions décrites précédemment sont programmées de telle façon qu'elle respecte le protocole ouvert de communication Universal Plug and Play (UnPnP), tout en assurant un des objectifs prioritaires de l'invention comme l'est l'installation d'un nouveau module ou service sous le concept « connecter et prêt », facilite l'extension du système sans nécessiter la reprogrammation de modules ou de services existants, ou l'intégration de nouveaux programmes qui permettent le contrôle des nouveaux dispositifs
ou services, ou qui entraine des tâches propres à un technicien spécialisé.

Le module base de contrôle (1), objet de l'invention, reçoit son alimentation, comme cela est indiqué au schéma 2, d'un sous- module d'alimentation (2), physiquement séparé du module de contrôle (1) et connecté à lui par le cable d'alimentation (42). Le sous-module d'alimentation (2) est connecté par un autre côté, et par le cablage (43), aux fils de phase, neutre et terre (26) qui vont jusqu'à la caisse de distribution, avec une tension alternative à fréquence en marge de 50-60 Hz et une valeur efficace en marge de 110-240 V. Le sous-module d'alimentation (2) fournit une alimentation en tension continue, à la valeur et puissance appropriées pour le fonctionnement optimal du module de base (1) et, en général, du système modulaire objet de l'invention.

### Sous-module de mises en marche et de contrôle des charges

Le contrôle domotique des dispositifs et des éléments de l'installation électrique est géré par le module base (1) par les sous-modules de mises en marche et de contrôle des charges (4).

Concernant l'objet de l'invention, le schéma 3 montre les blocs qui constituent le sous-modules de mises en marche et de contrôle des charges (4). Ce sous-module est connecté au module base (1) au moyen d'un connecteur (48) par lequel il reçoit l'alimentation, les ordres de mises en marche et fournit également les données concernant la consommation d'énergie du dispositif électrique qui est connecté à un autre connecteur (52). Ce dernier connecteur (52) est constitué de 3 terminals : un terminal d'entrée (que nous appellerons Phase d'entrèe-FI) et deux terminals de sortie ((que nous appellerons Phase de sortie 1 - FO1 et Phase de sortie 2 - FO2). En plus de ces deux connecteurs (48 et 52), le sous-module de mises en marche et de contrôle des charges (4) comprend un capteur de courant (50), un circuit climatisateur de signal (49) et un ensemble de relais (51). Le capteur de courant (50) envoie au circuit climatisateur de signal (49), un signal qui est fonction du courant qui circule dans la charge, le circuit climatisateur (49) reçoit ce signal, l'adapte au niveau optimal voulu aux entrées du microcontrolateur (32) du module base (1). L'ensemble du relais (51) se charge de transférer la puissance électrique à la charge, par le connecteur de trois terminals (52), quand le microcontrolateur (32) dy module base (1) l'indique ainsi.

La connexion entre le sous-module de mises en marche et de contrôle des charges (4) et les éléments à controler est particulier pour chaque type d'élément. Cette connexion permet de satisfaire un des objectifs prioritaires de l'invention, qui est de maintenir la coexistence entre le contrôle manuel conventionnel de l'utilisateur et le contrôle domotique,même dans le cas où le systéme domotique ne fonctionne plus.

Dans cette invention un sous-module de mises en marche (4) peut controler trois types d'éléments qui, à leur tour, fournissent l'énergie électrique à plusieurs dispositifs ou appareils dans un foyer conventionnel. Ces éléments sont : prises, interrupteurs simples et ensemble d'interrupteurs de commutation.

Pour intégrer le contrôle d'un élément « prise », dont l'installation et la connexion dans un réseau électrique conventionnel apparaissent schématiquement sur le schéma 7-a dans le système modulaire de contrôle domotique objet de l'invention, il faut une connexion, aussi objet de cette invention, dans laquelle on intégre une série d'opérations supplémentaires à celles qui sont réalisées normalement lors d'une installation conventionnelle. Cette connexion, qui apparaît schématiquement sur le schéma 7-b est caractérisé pour les raisons suivantes :
- un sous-module de mises en marche et de contrôle des charges (4) est connecté au module base de contrôle intelligent (1), situé dans la boite de distribution (10), à un des connecteurs (36) qui sont prévus à cet effet par le module base(1) ;
- le fil de phase qui va jusqu'à la boite de distribution (10) est connecté au terminal d'entrée (phase d'entrée - FI) du connecteur à trois terminales (52) du sous-module de mises en marche (4) ;
- un des terminals de sortie (phase de sortie 1 - FO1) du connecteur de trois terminales (52) du sous-module de mises en marche (4) est connectée à un terminal choisi de la prise (67) ;
- l'autre terminal de sortie (phase de sortie 2 - FO2) du connecteur de trois terminals (52) du sous-module de mises en marche (4) n'est pas connectée ;
- le fil de neutre qui va jusqu'à la boite à distribution (10) est directement connectée à l'autre terminal de la prise (67) ; et
- le fil de terre qui va jusqu'à la boite de distribution (10), dans le cas de son existence, est connectée au terminal de terre de la prise (67).

Pour intégrer le contrôle d'un élément « interrupteur simple » (68), dont l'installation et la connexion dans un réseau électrique conventionnel figurent au schéma 8-a dans le système modulaire de contrôle domotique objet de l'invention, il est nécessaire de remplacer l'interrupteur simple (68) par un interrupteur commuté (69) (schéma 8-b) et il faut une connexion entre différents éléments du système et l'interrupteur commuté, qui est compris aussi dans l'objet de l'invention, dans lequel se réalisent une série d'opérations supplémentaires à celles qui se réalisent lors d'une installation conventionnelle. Cette connexion, qui apparaît schématiquement au schéma 8-b, est caractérisé pour les raisons suivantes :
- un sous-module de mises en marche et de contrôle des charges (4) est connecté au module base de contrôle intelligent (1), situé dans la boite de distribution (10), à un des connecteurs (36) qui sont prévus à cet effet par le module base(1) ;
- le fil de phase qui va jusqu'à la boite de distribution (10) est connecté au terminal d'entrée (phase d'entrée - FI) du connecteur à trois terminales (52) du sous-module de mises en marche (4) ;
- un des terminals de sortie (phase de sortie 1 - FO1)du connecteur de trois terminales (52) du sous-module de mises en marche (4) est connectée à un des terminals de commutation de l'interrupteur commuté (69) ;
- l'autre terminal de sortie (phase de sortie 2 - FO2) du connecteur de trois terminals (52) du sous-module de mises en marche (4) est connectée à l'autre terminal de commutation de l'interrupteur commuté (69) ;
- le fil originaire de la charge est connecté au terminal commun de l'interrupteur commuté (69).

Pour intégrer le contrôle d'un « ensemble d'interrupteurs commutés » (69A et 69B), dont l'installation et la connexion dans un réseau électrique conventionnel figurent au schéma 8-a dans le système modulaire de contrôle domotique objet de l'invention, il est nécessaire de remplacer un des interrupteurs commutés (68) par un interrupteur de croisement (70) (schéma 9-b) et il faut une connexion, qui est compris aussi dans l'objet de l'invention, dans lequel se réalisent une série d'opérations supplémentaires à celles qui se réalisent lors d'une installation conventionnelle. Cette connexion, qui apparaît schématiquement au schéma 9-b, est caractérisé pour les raisons suivantes :
- un sous-module de mises en marche et de contrôle des charges (4) est connecté au module base de contrôle intelligent (1), situé dans la boite de distribution (10), à un des connecteurs (36) qui sont prévus à cet effet par le module base(1) ;
- le fil de phase qui va jusqu'à la boite de distribution (10) est connecté au terminal d'entrée (phase d'entrée - FI) du connecteur à trois terminales (52) du sous-module de mises en marche (4) ;
- un des terminals de sortie (phase de sortie 1 - FO1) du connecteur de trois terminales (52) du sous-module de mises en marche (4) est connectée à un des terminals de commutation de l'interrupteur de croisement (70) ;
- les terminals de sortie (S1 et S2) de l'interrupteur de croisement (70) sont connectés, respectivement, aux terminals de commutation de l'interrupteur commutè qui n'a pas été remplacé (69B).

Le contrôle de deux interrupteurs simples ou de deux boutons poussoirs qui s'utilisent en même temps pour alimenter des charges spécifiques, comme c'est le cas des moteurs à double sens de roulement, est considéré à part pour cette invention, peuvent avoir des répercussions négatives sur un des objectifs prioritaires de cette dernière, qui est de fournir une sécurité à ces charges, par une mise en marche simultanée et opposée du contrôle manuel domotique.

Pour intégrer ce type de contrôle, dont l'installation et la connexion dans un réseau électrique conventionnel figurent au schéma 10-a, dans le système modulaire de contrôle domotique objet de l'invention, il est nécessaire d'avoir une connexion, qui est compris aussi dans l'objet de l'invention, dans lequel se réalisent une série d'opérations supplémentaires à celles qui se réalisent lors d'une installation conventionnelle. Cette connexion, qui apparaît schématiquement au schéma 10-b, est caractérisé pour les raisons suivantes :
- deux sous-modules de mises en marche et de contrôle des charges (4), que nous appellerons A et B, sont connectés au module base de contrôle intelligent (1), situé dans la boite de distribution (10), à un des connecteurs (36) qui sont prévus à cet effet par le module base (1) ;
- le fil de phase qui va jusqu'à la boite de distribution (10) est connecté au terminal d'entrée (phase d'entrée - FI) du sous-module A ;
- un des terminals de sortie (phase de sortie 1 - FO1) du sous-module A est connecté au terminal d'entrée (FI) du sous-module B;
- un terminal de l'un des interrupteurs ou bouton poussoir (59A) est connecté à un des terminals de l'autre interrupteur ou bouton poussoir (59B) ;
- les terminals communs, reliés au point antérieur, sont connectés à un des terminals de sortie (FO1) du sous-module B ;
- l'autre terminal de sortie (FO2) du sous-module A est connecté à un des terminals non communs de l'ensemble des deux interrupteurs ou bouton poussoirs (59A et 59B), et également connecté à un des terminals (S) de la charge (71) ;
- l'autre terminal de sortie (FO2) du sous-module B est connecté aux autres terminals non communs de l'ensemble des interrupteurs ou bouton poussoirs (59A et 59B), et il est aussi connecté à l'autre terminal (B) de la charge (71) ; et
- le fil de neutre est connecté au terminal (N) de la charge (71) prévu à cet effet.

### Sous-module de capteurs et radiofréquence

Concernant l'objet de l'invention, le schéma 4 montre les blocs qui constituent le sous-module de capteurs et radiofréquence (3). Ce sous-module (3) est connecté au module base (1) au moyen d'un connecteur compris dans le bloc de communication en série (45), par lequel il reçoit l'alimentation. Les capteurs (27) sont connectés au module de capteurs (3) par un bloc de connecteurs (46). Le module base (1), lorsqu'il s'initialise il établit une communication qui va dans deux sens avec le module de capteurs (3) qui renseigne sur l'ètat de chaque capteur qui sont connectés. A partir de ce moment le sous-module de capteurs (3) mantient le module base informé (1) de tout changement dans les signaux originaires des capteurs (27). Les sous-module de capteurs (3) intégre une certaine intelligence électronique basée sur un microcontrolateur (44) de 8 bits, connecté autant au bloc de communication en série (45), par un bus (47), qu'à un bloc de connecteurs (46) par un bus de fils DEDICADOS. Le bloc de communication (45) gère deux ports de communication en série, un destiné à la communication avec le module base (1) et un autre destiné à la communication avec les autres dispositifs, tels que le sous-module de clavier et d'écran (8). Le microcontrolateur (44) analyse les données qui lui parviennent par les deux ports du bloc de communication (45) et décide si ces données doivent être gérées par les capteurs (27) ou s'ils doivent être retransmis au dispositif connecté à l'autre port. Le sous-module de capteurs peut intégrer un bloc de radiofréquence RF, connecté au microcontrolateur (44), par lequel recevoir des informations de capteurs qui utilisent ce moyen de transmission pour informer de son état.

### Sous-module régulateur de puissance électrique (dimmer)

Concernant l'objet de l'invention, le schéma 5 montre les blocs qui constituent le sous-module « dimmer » (5). Ce sous-module (5), intégre un connecteur (58) qui permet d'alimenter le circuit « dimmer » à partir du module base (1). Un bloc de communication en série (55) permet, par un connecteur approprié, d'établir une communication dans deux directions entre le module base (1) et le circuit microcontrolateur (53) qui intégre un logiciel de conception spécifique au contrôle et à la régulation du dimmer. Un bloc de détection et de régulation (54) est connecté au microcontrolateur (53). Ce bloc (54) recueille les informations de la tension alternative originaire du réseau d'alimentation électrique, par le fil de phase qui va jusqu'à la boite de distribution (10) et du fil originaire de la charge qui est connectée au « dimmer » au moyen d'un autre connecteur (56). Cette information est transmise au microcontrolateur (53) qui la traite et la retourne l'information de régulation de puissance au bloc de régulation (54), en accord avec l'information reçue du microcontrolateur (53). L'utilisateur peut agir sur la régulation de la puissance de deux façons différentes. La première est au moyen d'un bouton poussoir (77), comme cela est indiqué au schéma 11, ou au moyen d'un interrupteur (76) comme cela est indiqué au schéma 5, qui est connecté au module « dimmer » (5) par deux terminals compris dans le connecteur (57), et la deuxième par le point de contrôle (12), ou des différents dispositifs de contrôle (PDA, télécommande, etc.) que le système domotique objet de l'invention peut intégrer à cette fin. Le sous-module « dimmer » (5) est connecté à la charge, comme cela est indiqué au schéma 11, par le connecteur (56) qui intègre deux terminals : un des terminals est d'entrée (FI) et il se connecter au fil de phase du réseau électrique, et l'autre terminal est de sortie (FO) et se connecte á la charge (29). Pour que le sous-module « dimmer » (5) puisse controler la puissance sur la charge (29), même dans le cas d'une chute ou du non fonctionnement du module base (1), il faut une connexion spécifique, qui fait partie de l'objet de l'invention. Cette connexion, qui apparaît schématiquement au schéma 11, est caractérisé pour les raisons suivantes :
- un sous-module de réglage de puissance électrique (5) est connecté au module base de contrôle intelligent (1), situé dans la boite de distribution (10), à un des connecteurs (34) qui sont prévus à cet effet par le module base(1);
- le fil de phase qui va jusqu'à la boite de distribution (10) est connecté au terminal d'entrée (phase d'entrée - FI) du connecteur (56) qui s'utilise pour la connexion de la charge ;
- le terminal de sortie (phase de sortie 1 - FO1) du connecteur (56) indiqué au point antérieur (4) est connectée à un la charge (29) ;
- les deux terminals de l'interrupteur ou bouton poussoir (76 ou 77) sont connectés, respectivement, aux terminals (P1 et P2) du connecteur (57) qui s'utilise pour connecter l'interrupteur ou bouton poussoir (76 ou 77) au sous-module dimmer ; et
- le fil de neutre est connecté à l'autre terminal de la charge de l'éclairage (29).

### Sous-module de clavier et d'écran

Concernant l'objet de l'invention, , le schéma 6 montre les blocs qui constituent le sous-module de clavier et d'écran (8). Ce sous-module (8), se connecte au module base (1) par un connecteur compris dans le bloc de communication en série (61) qui permet d'alimenter et d'établir une communication dans deux directions de données. Le sous-module de clavier et d'écran (8) permet d'introduire des données dans le système domotique par le clavier (63) et de faire apparaître les messages à l'écran (62). Ce sous-module dispose d'une certaine intelligence électronique basée sur un microcontrolateur de 8 bits, qui intégre un logiciel de conception spécifique et contrôle l'entrée de données et la visualisation des états du système domotique. Le microcontrolateur (60) se charge d'inspecter un clavier (63) de 12 à 16 touches, par un bus parallèle (65) et d'envoyer l'information en appuyant sur la touche, au module base (1), par le moyen du bloc de communication (61). Le microcontrolateur (60), par un bus parallèle (66), communique avec un écran (62), en faisant apparaître les messages que le module base a transmis par le bloc de communication (61). Le sous-module de clavier et d'écran (8) dispose également d'indicateurs lumineux (64) qui renseigne sur l'état de fonctionnement du sous-module du système domotique.

### Sous-module de téléphonie mobile

Concernant l'objet de l'invention, le schéma 12 montre les blocs qui constituent le sous-module de téléphonie mobile (7). L'unité principale de ce sous-module est le modem (72), et son antenne (75) qui habilitent ce sous-module (7) afin qu'il transmette et qu'il reçoive des données dans les protocoles de communication mobile de la dernière génération tels que : GSM, GPRS, UMTS, etc. Le sous-module de téléphonie mobile (7) est connecté au module base (1) par un connecteur compris dans le bloc de communication en série (73), par lequel s'établit une communication dans deux sens. Le sous-module de téléphonie mobile (7) intégre un connecteur (74) qui permet l'alimentation originaire du module base (1). Le sous-module de téléphonie mobile (7) permet au module base de contrôle (1) de recevoir des données d'origine lointaine au moyen des technologies de communication mobiles de dernière génération. Par un dispositif mobile de dernière génération (28) (schéma 1), un utilisateur peut envoyer des ordres de contrôle que le sous-module de téléphonie mobile (7) reçoit et qu'il transmet au module base de contrôle (1) par un bloc de communication (73), pour agir de façon autonome selon les ordres reçues, ou pour renvoyer ces ordres à un dispositif du réseau, par eemple le point de contrôle, qui agirait à son tour en fonction de ces dernières et selon la programmation. Ainsi, le module base de contrôle (1) peut générer des événements, des alarmes ou des messages pour qu'ils soient envoyés au terminal mobile (28) de l'utilisateur par le sous-module de téléphonie mobile (7), tout en permettant que le système domotique continue d'informer l'utilisateur des événements de son foyer.

Le système modulaire décrit trouve son application dans le secteur de la domotique, dans le contrôle intelligent des dispositifs, dans la sécurité des alarmes techniques, dans la sécurité face à l'intrusion et la surveillance ; autant dans le secteur domestique qu'industriel. Le système modulaire décrit s'intégre totalement dans les réseaux de communication de derniére génération, comme internet, grace à sa conception sur des standards ouverts, indépendants du moyen physique utilisé pour la transmission, qu'il soit avec (IEEE 802.3 ou PLC) ou sans fil (IEE 802.11 dans ces variantes, RF, ou téléphonie mobile de dernière génération, GSM, GPRS, UMTS, etc.).

L'invention a été décrite en détails de façon générale et a été décrite en rapport avec ces possibles réalisations. Evidemment, des modifications peuvent se présenter sur cette réalisation qui peuvent s'inclure dans l'invention. Ainsi, ayant décrit une réalisation choisie pour notre invention, nous revendicons que celle-ci soit :

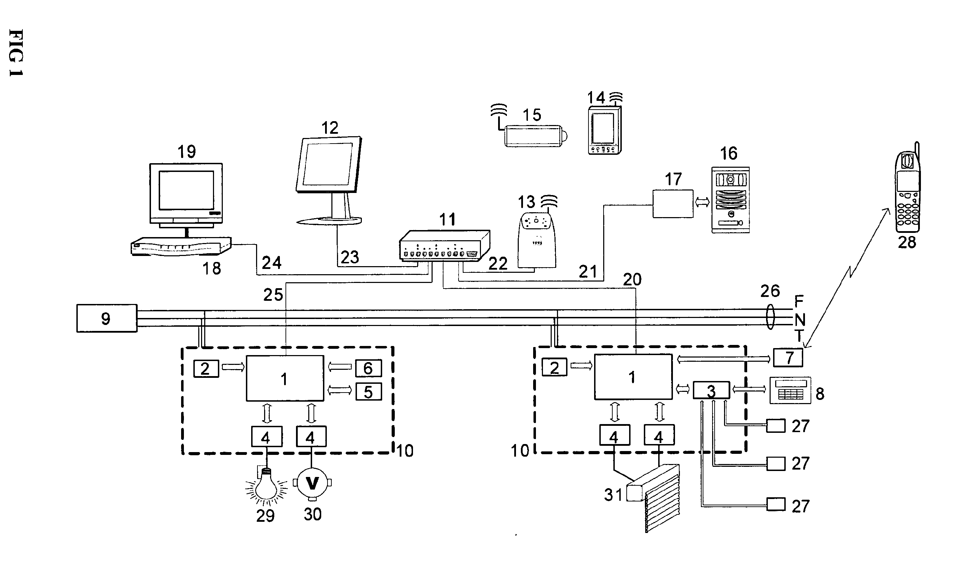

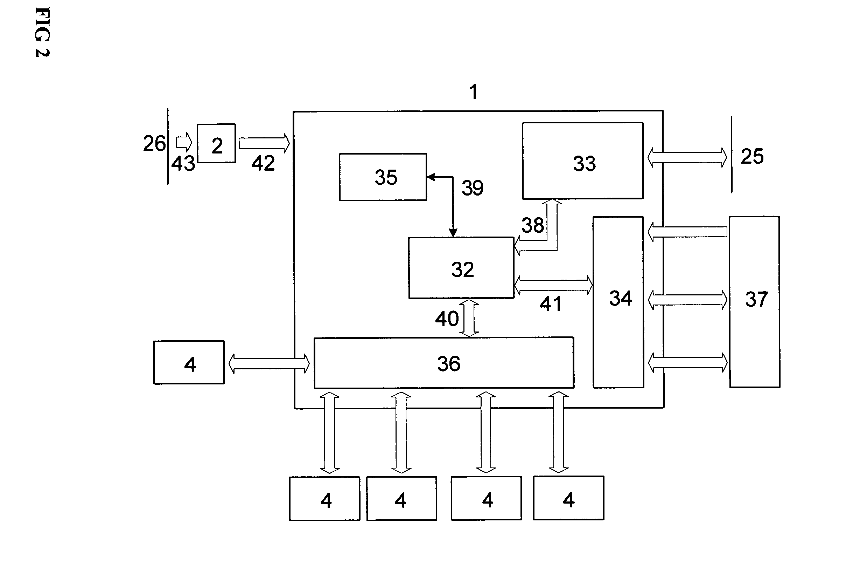

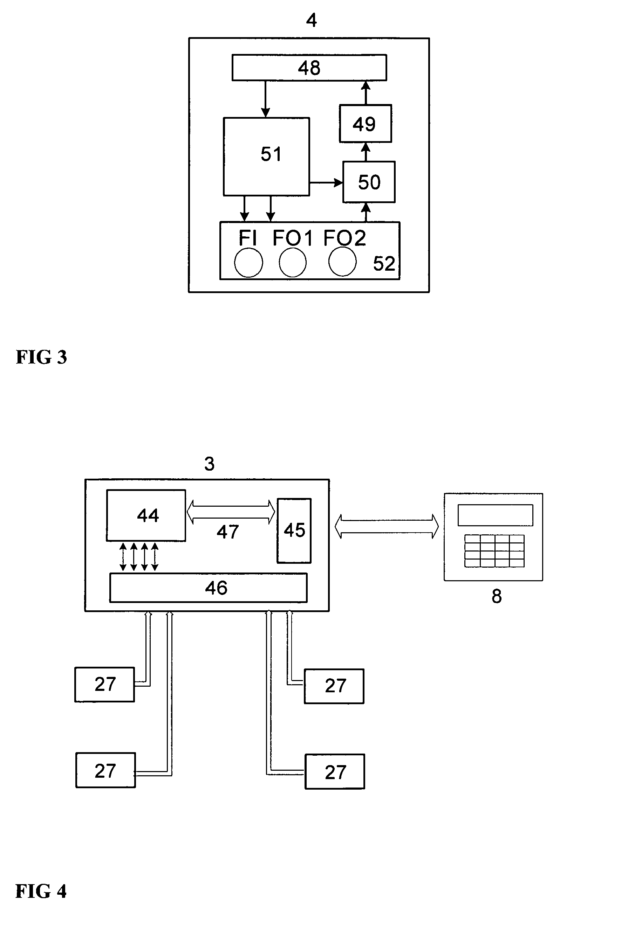

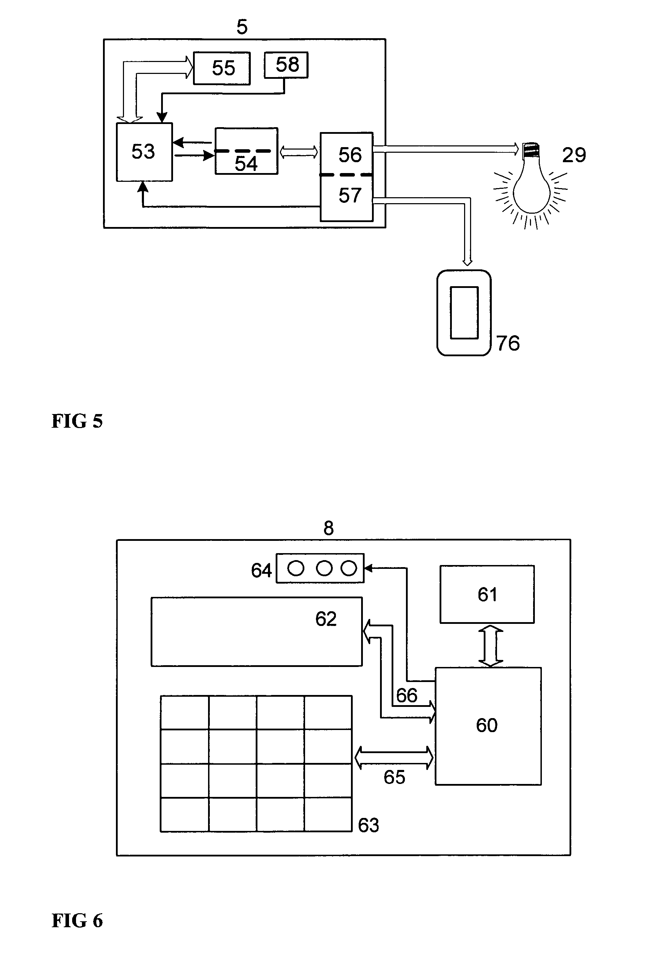

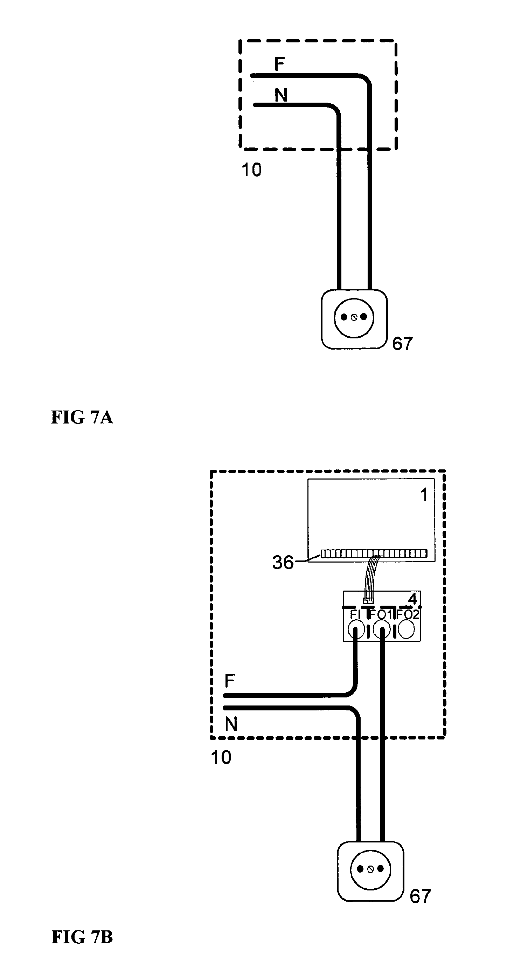

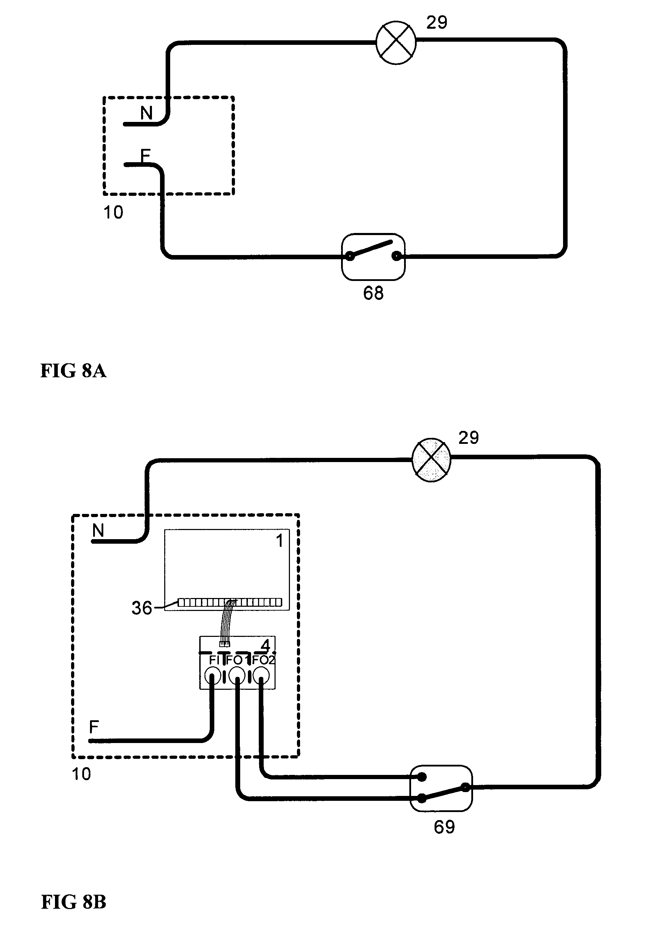

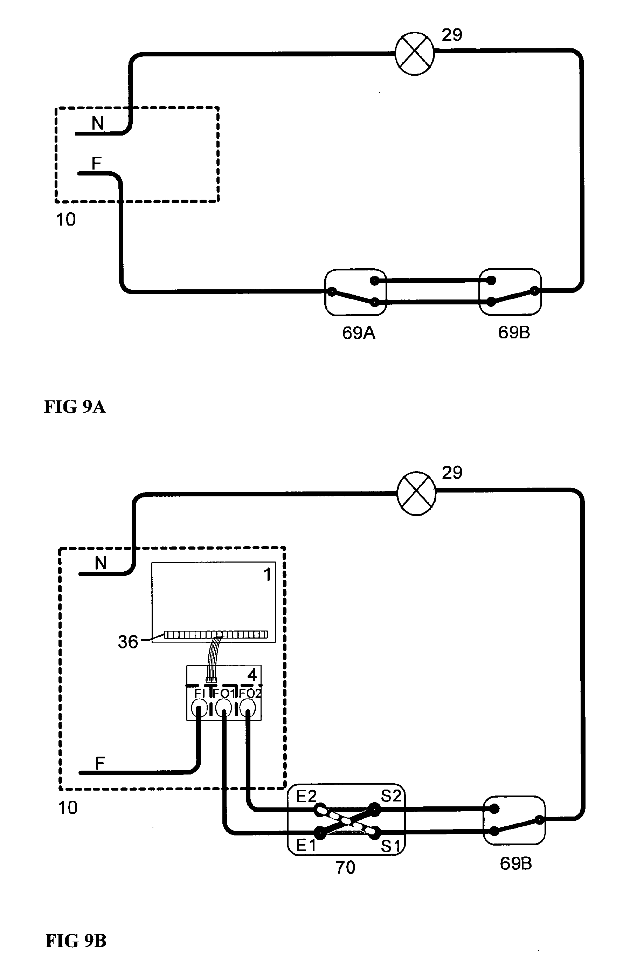

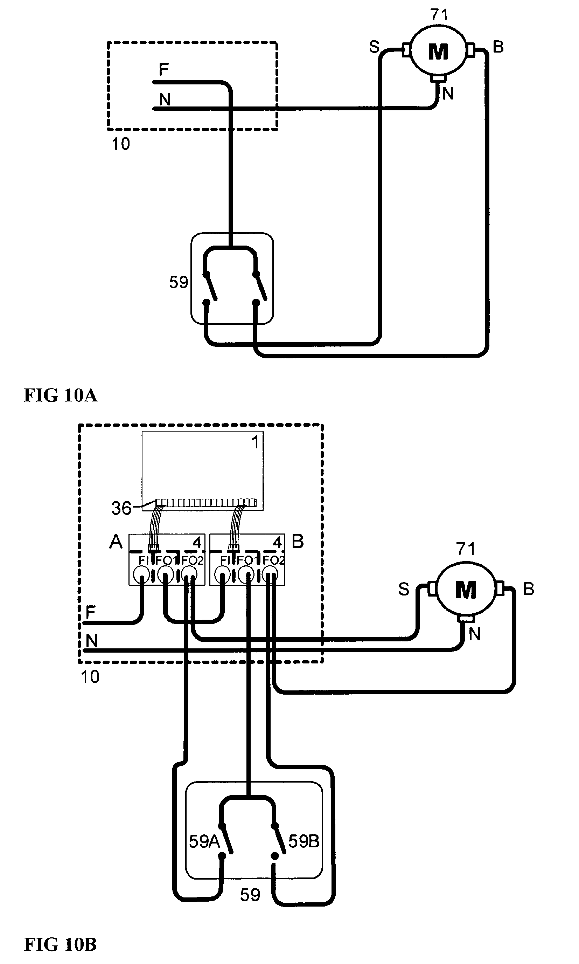

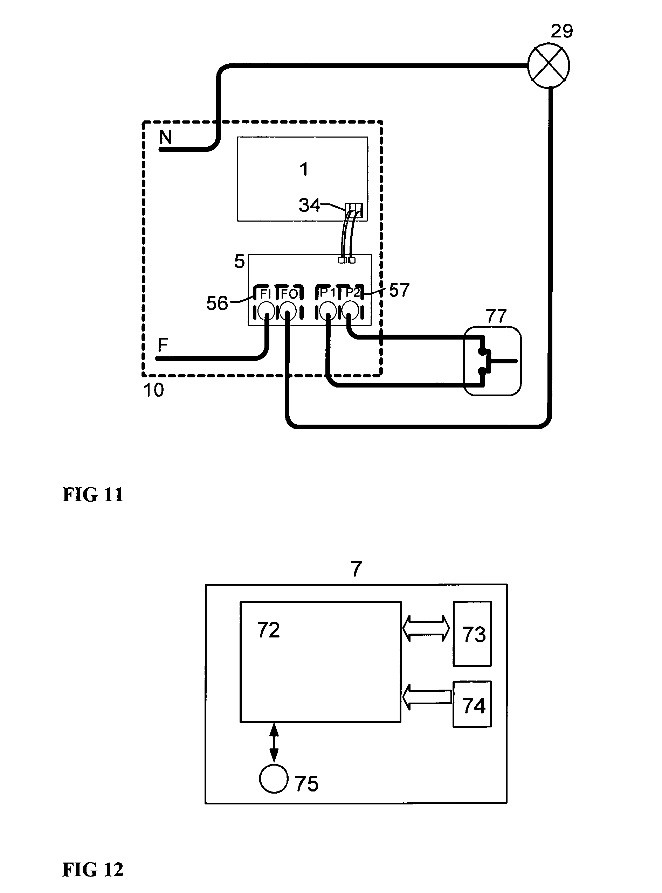

## Revendications

1. Système domotique pour la gestion et le contrôle électroniques et automatiques de dispositifs électriques du foyer qui comprend :
- une installation du réseau électrique dans laquelle la distribution de puissance se réalise par les boites de distribution (10) dans les différentes pièces du foyer, où arrivent dans chacune d'elles les fils électriques de phase, neutre et terre, cette dernière dans le cas
où l'installation existe, et à partir desquelles la puissance électrique se répand vers un ou plusieurs points ou dispositifs du réseau électrique ;
- un réseau de communication, qui peut s'intégrer, en quantité pas nésessairement unitaire, des dispositifs de cheminement et/ou de concentration de communication (11), des noeuds d'accès sans fil (13), des ordinateurs personnels (12), des serveurs audio et/ou vidéo, des reproducteurs audio et/ou vidéo, des décodeurs audio et/ou vidéo, des portiers vidéo et des caméras de surveillance, qui utilise un protocole de communication ouvert ou standardisé, compatible avec le réseau internet, et dont le canal physique est cablè en accord avec le standard IEEE 802.3 dans ces variantes,
ou un moyen sans fil qui va avec le le standard IEE 802.11 dans ces différentes versions, ou un canal sans fil sur des portiers de radiofréquence, ou un moyen cablé sur des portiers de fils de puissance, connu comme Power Line carrier (PLC), ou un réseau mixte parmi les précédents ; et
**caractérisé par**,
un ensemble de système modulaires de contrôle intelligent, qui jouent le role d'interface entre le réseau de communication et les points ou dispositifs du réseau électrique ; ou chaque système modulaire est installé dans les boites de distribution électrique du foyer ; et
où chaque système modulaire est constitué des modules et des sous-modules suivants :
- un sous-module d'alimentation (2),
- un module base de contrôle intelligent (1), et
- un ou plusieurs sous-modules de mise en marche et de contrôle des charges (4) ; où le sous-module d'alimentation (2) est connecté d'un côté aux fils de phase, neutre et terre, cette dernière dans le cas où elle existe, qui va jusqu'à la boite de distribution, et d'un autre côté au module base de contrôle (1) fournissant l'alimentation ;
où le module base de contrôle (1) est un dispositif électronique de contrôle intelligent qui comprend :
- un module de communication (33) qui lui permet d'établir une communication dans deux sens avec le réseau de communication et d'adapter la communication de données canal physique correspondant ;
- un microcontrolateur ou circuit à capacité de programmation et de contrôle (32), avec un nombre déterminé de ports d'entrée et de sortie, numériques et digitals, qui est connecté au module de communication (33) ;
- une mémoire (35), connectée au microcontrolateur (32) et qui s'utilise pour le stockage de données qui doivent rester sans alimentation provenant du module base ;
- un ensemble de connecteurs (34 et 36), connectés aussi au microcontrolateur (32), par des bus appropriés, qui permettent de connecter au module base (1) différents sous-modules et, en même temps, de fournir l'alimentation ;
où chaque sous-module de mise en marche et de contrôle des charges (4) est un dispositif électronique de mise en marche et de contrôle qui est connecté au module base (1), de celui qui reçoit l'alimentation, qui agit en fonction des ordres qu'il reçoit de celui-ci, et qui comprend :
- un connecteur (52) avec un terminal d'entrée (FI) et de deux terminals de sortie (FO1, FO2) qui s'utilisent pour connecter différents points ou dispositifs du réseau électrique au sous-module de mise en marche et de contrôle des charges (4).
- Un circuit capteur de courant (50) qui donne un signal qui est fonction du courant qui circule dans la charge qui est connectée par le connecteur (52) de trois terminals indiqué au point précédent ;
- un circuit climatisateur de signal (49), qui reçoit le signal du circuit capteur de courant, l'adapte aux niveaux souhaités pour être traité par le microcontrolateur intégré dans le module base (1), et le remet au module base (1) ; et
- un ensemble de relais (51), qui sont connectés au circuit capteur de courant (50), au connecteur à trois terminals (52) et au module base (1) par un autre connecteur (48), et qui se charge de transférer la puissance électrique à la charge quand il reçoit les ordres correspondants du module base ;
et où le module base de contrôle, lorsqu'il est alimenté, il exécute une série d'opérations au moyen du microcontrolateur qui consistent en :
- assigner de forme automatique, ou accepter de l'un des dispositifs intégrés au réseau de communication, un code qui identifie le système modulaire, qui intégré ce module base, dans le réseau de communication et du système domotique ;
- informer le système domotique des services qu'il intègre, qui comprend ce module base, tout en indiquant ainsi, comment les gérer et quelles informations il peut fournir.
- après cette étape, permettre de réaliser le contrôle du système modulaire, et d'envoyer par le réseau de communication, l'information qu' il doit fournir concernant le point précédent et conformément à la description réalisée ; et
- renseigner sur les adresses du réseau où l'on peut avoir accès au contrôle et à la description du système modulaire et de ces services.

2. Un système pour la gestion et le contrôle électroniques et automatiques des dispositifs électriques du foyer, en accord avec la 1 ° revendication, **caractérisée par**ce qu'un dispositif ou point de contrôle (12) est connecté au réseau de communication, qui s'utilise pour le contrôle et la gestion générale du système domotique, qui comprend un ordinateur ou un circuit intègrè d'application spécifique, et qui, lorsqu'il est alimenté et connecté au réseau de communication du système domotique, réalise les opérations suivantes :
- le point de contrôle interroge le réseau de communication à la recherche de dispositifs qui, étant connectés au réseau de communication du système domotique, peuvent être controlés de façon électronique sous le même protocole, ou un compatible, auquel il intégre le point de contrôle ;
- le point de contrôle reçoit et stocke les informations de chacun des dispositifs, sur le code d'identification, sur les services que chaque dispositif intègre et sur la façon de les gérer et des renseignements qu'il fournit.
- le point de contrôle intègre automatiquement chaque dispositif, tout en rendant possible sa gestion et son contrôle. Ainsi, le point de contrôle se prépare à recevoir toute donnée que chaque dispositif connecté au réseau puisse envoyer ; et
- le point de contrôle reçoit et intègre les informations concernant l'adresse du réseau de communication où l'on peut avoir accès à la propre page de description et de contrôle de chaque dispositif.

3. Un système pour la gestion et le contrôle électroniques et automatiques des dispositifs électriques du foyer, en accord avec la 1° ou 2° revendication, qui s'utilise pour controler, au moins, un élément « prise » (67) du réseau électrique, et où la connexion entre les différentes parties du système et de l'élément « prise » à controler est **caractérisé** pour les raisons suivantes :
- un sous-module de mises en marche et de contrôle des charges (4) est connecté au module base de contrôle intelligent (1), situé dans la boite de distribution (10), à un des connecteurs (36) qui sont prévus à cet effet par le module base(1) ;
- le fil de phase qui va jusqu'à la boite de distribution (10) est connecté au terminal d'entrée (phase d'entrée - FI) du connecteur à trois terminales (52) du sous-module de mises en marche (4) ;
- un des terminals de sortie (phase de sortie 1 - FO1) du connecteur de trois terminales (52) du sous-module de mises en marche (4) est connectée à un terminal choisi de la prise (69) ;
- l'autre terminal de sortie (FO2) du connecteur (52) des trois terminals du sous-module de mise en marche (4) n'est pas connecté.
- le fil de neutre qui va jusqu'à la boite de distribution (10) est connecté directement à l'autre terminal de la prise (67) ; et
- le fil de terre qui va jusqu'à la boite de distribution (10), dans le cas de son existence, est connecté au terminal de terre de la prise (67).

4. Un système pour la gestion et le contrôle électroniques et automatiques des dispositifs électriques du foyer, en accord avec la 1° ou 2° revendication, qui s'utilise pour controler, au moins, un point « interrupteur simple» (68) du réseau électrique, dans lequel on remplace cet interrupteur simple par un interrupteur de commutation (69), et où la connexion entre les différents éléments du systéme et de cet interrupteur de commutation (69), est **caractérisé** pour les raisons suivantes :
- un sous-module de mises en marche et de contrôle des charges (4) est connecté au module base de contrôle intelligent (1), situé dans la boite de distribution (10), à un des connecteurs (36) qui sont prévus à cet effet par le module base (1) ;
- le fil de phase qui va jusqu'à la boite de distribution (10) est connecté au terminal d'entrée (phase d'entrée - FI) du connecteur à trois terminales (52) du sous-module de mises en marche (4) ;
- un des terminals de sortie (phase de sortie 1 - FO1) du connecteur de trois terminales (52) du sous-module de mises en marche (4) est connectée à un terminal de commutation de l'interrupteur commuté (69) ;
- l'autre terminal de sortie (FO2) du connecteur (52) de trois terminals du sous-module de mise en marche (4) est connecté à l'autre terminal de commutation de l'interrupteur commuté (69); et
- le fil originaire de la charge est connecté à l'autre terminal commun de l'interrupteur commuté (69).

5. Un système pour la gestion et le contrôle électroniques et automatiques des dispositifs électriques du foyer, en accord avec la 1° ou 2° revendication, qui s'utilise pour integrer le contrôle, d'au moins, un ensemble d' « interrupteurs commutés» (69A et 69B) du réseau électrique, dans lequel on remplace les interrupteurs commutés (69A) par un interrupteur de croisement (70), et où la connexion entre les différents éléments du systéme, l'interrupteur de croisement (70), et l'interrupteur commuté (69B) qui n'a pas été remplacé dans l'installation, est **caractérisé** pour les raisons suivantes :
- un sous-module de mises en marche et de contrôle des charges (4) est connecté au module base de contrôle intelligent (1), situé dans la boite de distribution (10), à un des connecteurs (36) qui sont prévus à cet effet par le module base (1) ;
- le fil de phase qui va jusqu'à la boite de distribution (10) est connecté au terminal d'entrée (phase d'entrée - FI) du connecteur à trois terminales (52) du sous-module de mises en marche (4) ;
- un des terminals de sortie (phase de sortie 1 - FO1) du connecteur de trois terminales (52) du sous-module de mises en marche (4) est connectée à un terminal d'entrée (E1) de l'interrupteur de croisement (70) ;
- l'autre terminal de sortie (FO2) du connecteur (52) de trois terminals du sous-module de mise en marche (4) est connecté à l'autre terminal d'entrée (E2) de l'interrupteur de croisement (70) ;
- les terminals de sortie (S1, S2) de l'interrupteur de croisement (70) sont connectés, respectivement, avec les terminals de commutation de l'interrupteur commuté (69B).

6. Un système pour la gestion et le contrôle électroniques et automatiques des dispositifs électriques du foyer, en accord avec la 1° ou 2° revendication, qui s'utilise pour intégrer le contrôle, d'au moins, un ensemble d' « interrupteurs simples ou boutons poussoirs (59A et 59B) qui s'utilise pour alimenter des charges spécifiques, comme c'est le cas des moteurs à double sens de roulement, où la connexion entre les différents éléments du système et de l'ensemble des deux interrupteurs ou boutons poussoirs (59A et 59B), est **caractérisé** pour les raisons suivantes :
- deux sous-modules de mises en marche et de contrôle des charges (4), que nous appellerons A et B, sont connectés au module base de contrôle intelligent (1), situé dans la boite de distribution (10), à un des connecteurs (36) qui sont prévus à cet effet par le module base (1) ;
- le fil de phase qui va jusqu'à la boite de distribution (10) est connecté au terminal d'entrée (phase d'entrée - FI) du sous-module A ;
- un des terminals de sortie (phase de sortie 1 - FO1) du sous-module A est connecté au terminal d'entrée (FI) du sous-module A ;
- un terminal de l'un des interrupteurs ou boutons poussoirs (59A) est connecté à un des terminals de l'autre interrupteur bouton poussoir (59B) ;
- les terminals communs, reliés au point antérieur, sont connectés à un des terminals de sortie (FO1) du sous-module B ;
- l'autre terminal de sortie (FO2) du sous-module A est connecté à un des terminals non communs de l'ensemble des deux interrupteurs ou boutons poussoirs (59A). Ainsi, il est connecté à un des terminals (S) de la charge (71) ;
- l'autre terminal de sortie (FO2) du sous-module B est connecté à autre terminal non commun de l'ensemble des interrupteurs ou boutons poussoirs (59B). Ainsi il est connecté à l'autre terminal (B) de la charge (71) ; et
- le fil de neutre est connecté au terminal (N) de la charge (71) prévu à cet effet.

7. Un système pour la gestion et le contrôle électroniques et automatiques des dispositifs électriques du foyer, en accord avec la 1° ° ou 2° revendication, et **caractérisé par**ce que des sous-modules de capteurs sont connectés à plusieurs ou un des modules base de contrôle (1) qui reçoivent l'alimentation de chaque module base auquel il est connecté, et dont chacun comprend :
- un bloc de connecteurs (46) auquel un nombre déterminé de capteurs (27) sont connectés ;
- un circuit microprocresseur ou microcontrolateur (44) capable d'envoyer et de recevoir des données du module base (1) et d'informer de l'état des capteurs qui sont connectés au sous-modules capteur ; et
- un connecteur (45) qui permet la connexion d'un sous-module de clavier et d'écran (8), qui s'utilise pour reprogrammer des informations dans le circuit microprocresseur ou microcontrolateur (44).

8. Un système pour la gestion et le contrôle électroniques et automatiques des dispositifs électriques du foyer, en accord avec la 7° revendication, et **caractérisé par**ce que le sous-module de capteurs (3) intégre un bloc de communication capable d'envoyer et de recevoir des données de dispositifs lointains en utilisant des ondes poreuses de radiofréquence modulées.

9. Un système pour la gestion et le contrôle électroniques et automatiques des dispositifs électriques du foyer, en accord avec la 1° ou 2° revendication, et **caractérisé par**ce que des sous-modules de réglage de puissance électrique (dimmer) (5), sont connectés à plusieurs ou un des modules base de contrôle (1) qui peuvent avoir des charges d'éclairage, qui reçoivent l'alimentation de chaque module base (1) auquel ils sont connectés, et dont chacun comprend :
- un bloc de communication (55) qui permet d'établir une communication dans deux sens avec le module base (1) ;
- un circuit microcontrolateur (53) qui intégre un logiciel de conception spécifique pour le contrôle et le réglage de la puissance électrique que le sous-module de réglage doit fournir à la charge d'éclairage qu'il a connecté ;
- un bloc de détection et de réglage (54) qui agit en même temps que le circuit microcontrolateur (53) ;
- un premier connecteur (57) à deux terminals qui s'utilise pour connecter le mécanisme, interrupteur ou bouton poussoir (76 ou 77), qui s'utilise pour controler de façon manuelle le sous-module de réglage de puissance électrique ;
- un second connecteur (56), avec deux terminals, l'un d'eux d'entrée (FI) et l'autre de sortie (FO), qui s'utilise pour connecter la charge d'éclairage ; et où,
- le fil de phase qui va jusqu'à la boite de distribution (10) est connecté au terminal d'entrée (phase d'entrée - FI) du second connecteur (56) ;
- le terminal de sortie (FO) du second connecteur (56) est connecté à un terminal de la charge d'éclairage ;
- les deux terminals de l'interrupteur ou bouton poussoir (76 ou 77), qui s'utilise pour controler de façon manuelle le sous-module de réglage de puissance électrique sont connectés, respectivement, avec les deux terminals du premier connecteur (57) ; et
- le fil de neutre est connecté à l'autre terminal de la charge de l'éclairage.

10. Un système pour la gestion et le contrôle électroniques et automatiques des dispositifs électriques du foyer, en accord avec la 1° ou 2° revendication, et **caractérisé par**ce que des sous-modules de clavier et d'écran (8), sont connectés à plusieurs ou un des modules base de contrôle (1) qui reçoivent l'alimentation de chaque module base (1) auquel il est connecté, et dont chacun comprend :
- un bloc de communication (61) qui permet d'établir une communication dans deux sens avec le module base (1) ;
- un clavier (63) ;
- un écran ou interface graphique (62) ;
- un microcontrolateur (60), qui intégre un programme de conception spécifique qui contrôle la communication, les données introduites grace au clavier (63) et les messages qui doivent apparaître sur l'écran (62) ; et
- des indicateurs lumineux (64) pour informer des états de fonctionnement qui sont intéressants pour l'utilisateur.

11. Un système pour la gestion et le contrôle électroniques et automatiques des dispositifs électriques du foyer, en accord avec la 1° ou 2° revendication, et **caractérisé par**ce que des sous-modules de téléphonie mobile (7), sont connectés à plusieurs ou un des modules base de contrôle (1), qui permettent la communication dans deux sens de chaque module base (1) avec un dispositif de téléphonie mobile de dernière génération (28), qui reçoivent l'alimentation de chaque module base (1) auquel ils sont connectés, et dont chacun comprend :
- un modem de téléphonie mobile de dernière génération (72) avec son antenne (75), à la capacité d'envoyer et de recevoir des données en fonction des protocoles de téléphonie mobile de dernière génération, et
- un bloc de communication (73) qui rend possible la communication dans deux sens avec le module base (1) ;

12. Un système pour la gestion et le contrôle électroniques et automatiques des dispositifs électriques du foyer, en accord avec la 1° ou 2° revendication, et **caractérisé par**ce que des sous-modules cités ci-bas (7), sont connectés à plusieurs ou un des modules base de contrôle (1) :
- un ou plusieurs sous-modules de capteurs en accord avec la 7° ou 8° revendication ;
- un ou plusieurs sous-modules de réglage de puissance électrique en accord avec la 9° revendication ;
- un ou plusieurs sous-modules de clavier et d'écran en accord avec la 10° revendication ; et
- un ou plusieurs sous-modules de téléphonie mobile en accord avec la 11° revendication.

13. Un système pour la gestion et le contrôle électroniques et automatiques des dispositifs électriques du foyer, en accord avec une de ces revendications la 7°, 8°, 9°, 10°, 11°, et 12° et utilisé pour intégrer le contrôle des éléments du réseau électrique en acord avec une de ces revendications la 3°, 4°, 5° ou 6°.
